# EUROPÄISCHE PATENTSCHRIFT

(11) **EP 0 850 151 B1**
(45) Veröffentlichungstag und Bekanntmachung des Hinweises auf die Patenterteilung: **31.10.2001**
(21) Anmeldenummer: 97932827.5
(22) Anmeldetag: 14.07.1997
(51) Int. Cl.: B60G 21/055, B60G 17/056

(54) **EINRICHTUNG ZUR ROLLSTABILISIERUNG EINES FAHRZEUGS**
MEANS FOR ROLL STABILISATION OF A VEHICLE
DISPOSITIF ANTIROULIS D'UN VEHICULE

(30) Priorität: 16.07.1996 DE 19628612; 23.07.1996 DE 19629582
(43) Veröffentlichungstag der Anmeldung: 01.07.1998
(73) Patentinhaber: LuK Fahrzeug-Hydraulik GmbH & Co. KG, 61352 Bad Homburg (DE)
(72) Erfinder: AGNER, Ivo, D-61352 Bad Homburg (DE)
(74) Vertreter: Gleiss, Alf-Olav, Dr.jur. Dipl.-Ing.
(86) Internationale Anmeldenummer: EP9703761
(87) Internationale Veröffentlichungsnummer: WO9802322

(56) Entgegenhaltungen:
- DE-A- 4 326 447
- DE-A- 4 327 044
- DE-A- 4 337 765
- DE-A- 19 549 385
- DE-A- 19 622 964
- FR-A- 2 675 435
- GB-A- 2 235 168
- NL-A- 8 702 468
- PATENT ABSTRACTS OF JAPAN vol. 012, no. 336 (M-739), 9.September 1988 & JP 63 097414 A (NIPPON DENSO CO LTD;OTHERS: 01), 28.April 1988,
- PATENT ABSTRACTS OF JAPAN vol. 012, no. 464 (M-771), 6.Dezember 1988 & JP 63 188512 A (NIPPON DENSO CO LTD), 4.August 1988,
- PATENT ABSTRACTS OF JAPAN vol. 012, no. 381 (M-752), 12.Oktober 1988 & JP 63 134222 A (KUREHA CHEM IND CO LTD), 6.Juni 1988,

## Beschreibung

Die Erfindung betrifft eine Einrichtung zur Verminderung der Rollneigung eines Fahrzeugs mit mindestens einer wenigstens zwei Räder aufweisenden Achse, die mit einem Querstabilisator versehen ist, gemäß Oberbegriff des Anspruchs 1 und eine Einrichtung zur Verminderung der Rollneigung eines Fahrzeugs mit mindestens zwei wenigstens je zwei Räder aufweisenden Achse, gemäß Oberbegriff des Anspruchs 7.

Einrichtungen der hier angesprochenen Art sind bekannt. Sie dienen dazu, die Federung eines Fahrzeugs bei einem einseitigen Ein- und Ausfedern der einer Achse zugeordneten Räder zu verhärten und damit eine Drehschwingung des Fahrzeugs um seine Längsachse zu vermeiden. Derartige Schwingungen werden auch als Rollen oder Wanken bezeichnet. Die bekannten Einrichtungen weisen eine Hydraulikeinrichtung, insbesondere einen Schwenkmotor, auf, der mit zwei Stabilisatorabschnitten so zusammenwirkt, daß eine gegenseitige Verdrehung bewirkt wird. Die damit erzeugten Drehmomente wirken einer Einfederung eines mit dem Querstabilisator verbundenen Rades entgegen. Es hat sich herausgestellt, daß nicht in allen Fällen eine optimale Funktionssicherheit derartiger Einrichtungen gewährleistet werden kann.

Aus der GB-A-22 35 138, die dem gattungsbildenden Oberbegriff der Ansprüche 1 und 7 darstellt, geht eine Einrichtung zur Verhinderung der Rollneigung eines zweiachsigen Fahrzeugs hervor, die zwei Hydraulikeinrichtungen mit jeweils zwei gegeneinander verdrehbare Stabilisatorabschnitte umfaßt. Ferner weist sie eine Ventileinrichtung mit zwei Umschaltventilen und einem Sicherheitsventil auf. Die Ventile sind jeweils unabhängig voneinander elektromagnetisch oder mittels Federkraft betätigbar. Die Umschaltventile und das Sicherheitsventil sind derart ausgebildet und so in das hydraulische System integriert, daß bei einer Störung das Sicherheitsventil in eine Funktionsstellung geschaltet wird, in der die hydraulischen Anschlüsse der Hydraulikeinrichtung blockiert werden, so daß die in den Druckkammern der der Vorderachse zugeordneten Hydraulikeinrichtung befindliche Hydraulikflüssigkeit eingeschlossen ist. Dadurch wird eine Versteifung der Vorderachsenstabilisatorabschnitte bewirkt. Das hydraulische System ist ferner so konzipiert, daß bei in seine Sicherheits-Funktionsstellung geschaltetem Sicherheitsventil das in den Druckkammer der der Hinterachse zugeordneten Hydraulikeinrichtung befindliche Fluid bei Überschreiten eines durch einen Druckregler festgelegten Drucks in einen Tank zurückströmen kann, so daß die Hinterachsen-Hydraulikeinrichtung entlastet ist. Dadurch wird sichergestellt, daß bei geschaltetem Sicherheitsventil die Vorderachsenstabilisierung immer steifer als die Hinterachsenstabilisierung ist.

Aus der JP-A-63 097414 geht eine Steuereinrichtung für einen hydraulischen Stabilisator hervor, die so ausgebildet ist, daß der Fluidstrom zum Stabilisator einstellbar ist.

Aus der DE-A-43 37 765 geht ein Zweikreishydrauliksystem für eine aktive Fahrwerksregelung zur Unterdrückung der Rollbewegung eines Kraftfahrzeugs hervor. Das System umfaßt eine Ventileinrichtung mit zwei unabhängig voneinander betätigbaren Ventilen, die jeweils die Funktion eines Sicherheits- und eines Umschaltventils besitzen. Jedes der Ventile ist in einem Fluidpfad von einer Versorgungspumpe zu einem einer der Achsen des Fahrzeugs zugeordneten Hydraulikeinrichtung angeordnet.

Aus der DE-A-43 26 447 und der DE-A-43 27 044 gehen eine hydraulische Stabilisatorsteuerung hervor, bei der die Ventileinrichtung für die beiden jeweils einer der Achsen des Fahrzeugs zugeordneten Hydraulikeinrichtungen nur ein Ventil umfaßt, das die Funktion eines Sicherheits- und Umschaltventils aufweist. Aufgrund dieser Ausgestaltung der Ventileinrichtung sind lediglich zwei Schaltmagnete erforderlich, um das Ventil in seine insgesamt drei Funktionsstellungen zu verlagern. Aufgrund dieser Ausgestaltung soll eine kostengünstige Stabilisatorsteuerung geschaffen werden.

Die der Erfindung zugrunde liegende Aufgabe besteht darin, eine Einrichtung zur Verminderung der Rollneigung eines Fahrzeugs zu schaffen, die einen einfachen und somit kostengünstigen Aufbau aufweist. Mithin soll eine platzsparende Bauweise realisierbar sein. Ferner soll eine hohe Funktionssicherheit, insbesondere des Sicherheitsventils, gewährleistet werden können.

Zur Lösung dieser Aufgabe wird eine Einrichtung vorgeschlagen, die die in Anspruch 1 genannten Merkmale aufweist. Die Einrichtung, die lediglich einer der Achsen des Fahrzeugs zugeordnet ist, umfaßt einen Querstabilisator, der mit der Achse gekoppelt ist. Der Querstabilisator umfaßt zwei mit Hilfe einer von einer elektronischen Steuereinrichtung angesteuerten Hydraulikeinrichtung gegeneinander verdrehbare Stabilisatorabschnitte. Ferner sind mindestens eine die Hydraulikeinrichtung versorgende Pumpe und eine Ventileinrichtung vorgesehen, die unabhängig voneinander betätigbare Umschalt- und Sicherheitsventile aufweist. Die mit der Hydraulikeinrichtung zusammenwirkende Ventileinrichtung dient dazu, die Verdrehrichtung und Kopplung der Stabilisatorabschnitte zu beeinflussen. Das Umschaltventil dient dazu, die Hydraulikeinrichtung so anzusteuern, daß auch in rascher Folge entgegengesetzte Drehmomente in die Abschnitte des Querstabilisators eingeleitet werden können. Das Sicherheitsventil hat die Aufgabe, bei einem Ausfall der der Hydraulikeinrichtung zugeordneten Steuereinrichtung die Hydraulikeinrichtung in einen definierten Funktionszustand zu überführen. Es hat sich herausgestellt, daß das Umschaltventil, beispielsweise aufgrund einer Verschmutzung der Hydraulikflüssigkeit, klemmen kann. Dadurch, daß die Hydraulikeinrichtung ein Umschalt- und ein Sicherheitsventil umfaßt, die voneinander getrennt sind, kann eine Funktionsminderung des Umschaltventils die Sicherheit der Einrichtung zur Verminderung der Rollneigung nicht beeinträchtigen, da ein getrenntes unabhängiges Sicherheitsventil vorgesehen ist. Die Einrichtung zeichnet sich dadurch aus, daß die Ventileinrichtung ausschließlich ein Umschaltventil und ausschließlich ein Sicherheitsventil umfaßt, was deren Aufbau vereinfacht und eine kostengünstige Bauweise ermöglicht. Die Einrichtung zeichnet sich aufgrund ihres unabhängig von dem Umschaltventil betätigbaren Sicherheitsventils durch eine hohe Funktionssicherheit aus.

Bevorzugt wird ein Ausführungsbeispiel der Einrichtung, das sich dadurch auszeichnet, daß das Sicherheitsventil das letzte Funktionsglied in der hydraulischen Versorgung der Hydraulikeinrichtung ist. Üblicherweise sind zwischen der die Hydraulikeinrichtung versorgenden Pumpe und der Hydraulikeinrichtung selbst mehrere Funktionsglieder vorgesehen, beispielsweise Einrichtungen zur Erfassung und Beeinflussung der Hydraulikströmung und des Drucks. Fehler in einem oder mehreren dieser Systeme können zu nachhaltigen Sicherheitseinbußen führen. Wird das Sicherheitsventil unmittelbar vor der Hydraulikeinrichtung angeordnet, können alle zwischen Pumpe und dem Sicherheitsventil anfallenden Fehlerzustände abgefangen werden.

Weitere Ausgestaltungen ergeben sich aus den übrigen Unteransprüchen.

Die Aufgabe wird auch durch eine Einrichtung zur Verminderung der Rollneigung eines Fahrzeugs gelöst, das mindestens zwei jeweils wenigstens zwei Räder aufweisende Achsen, den Achsen zugeordnete Querstabilisatoren und Hydraulikeinrichtungen umfaßt. Es handelt sich also insbesondere um Personenkraftwagen, die mit einer derartigen Einrichtung versehen sind. Die Einrichtung zeichnet sich dadurch aus, daß die Ventileinrichtung jeweils ein Umschaltventil und ein unabhängig davon betätigbares Sicherheitsventil für jede Hydraulikeinrichtung umfaßt und daß die Umschaltventile und/oder die Sicherheitsventile starr miteinander gekoppelt sind. Aufgrund dieser Ausgestaltung ergeben sich unter anderem die oben abgehandelten Sicherheitsvorteile. Vorteilhaft ist ferner, daß dadurch, daß die Umschaltventile miteinander und die Sicherheitsventile miteinander gekoppelt sind, für die Umschaltventile und die Sicherheitsventile jeweils nur eine einzige Betätigungseinrichtung erforderlich ist, was den Aufbau der Einrichtung vereinfacht.

Weitere Ausgestaltungen ergeben sich aus den übrigen Unteransprüchen.

Die Aufgabe wird außerdem durch eine Einrichtung zur Verminderung der Rollneigung eines Fahrzeugs mit mindestens zwei Achsen gelöst, die außerdem eine Stromteilereinrichtung umfaßt, die den von der Pumpe angelieferten und den Hydraulikeinrichtungen der Achsen zugeführten Ölstrom aufteilt. Die Einrichtung zeichnet sich dadurch aus, daß die Pumpe als volumenstrombegrenzte Pumpe ausgebildet ist, die den maximal von der Pumpe zu fördernden Hydraulikstrom begrenzt. Mit dieser Pumpe wirkt eine Stromteilereinrichtung zusammen, die einen Stromregler umfaßt. Dieser ist so ausgelegt, daß zunächst erst eine der Hydraulikeinrichtungen mit einem vorzugsweise nahezu konstanten Hydraulikölstrom versorgt wird, bis der Stromregler anspricht und die Hydraulikverbindung zwischen Pumpe und der zweiten Hydraulikeinrichtung freigibt. Eine derartig ausgebildete Stromteilereinrichtung ist sehr unanfällig gegen Schwingungen. Herkömmliche Stromteilereinrichtungen sind als klassische Stromteiler ausgebildet und weisen zwei Steuerkanten auf, von denen eine der Versorgung der einen Hydraulikeinrichtung und die andere der Versorgung der zweiten Hydraulikeinrichtung zugeordnet ist. Der von der Pumpe angelieferte Hydraulikstrom wird immer an der Steuerkante geregelt, die der Hydraulikeinrichtung mit dem niedrigeren Druck zugeordnet ist. Sind die Drücke der beiden Hydraulikeinrichtungen annährend gleich groß, kommt es aufgrund der Ventilhysterese zu unkontrollierten Steuerkantenwechseln. Diese gegenseitige kopplungsbedingte Beeinflussung der beiden Fluidströme führt dazu, daß der Stromteiler schwingungs- und toleranzempfindlich ist. Durch die hier vorgeschlagene Ausgestaltung, nämlich durch die Kombination einer volumenstrombegrenzten Pumpe mit einem Stromregler können Schwingungs- und Toleranzprobleme erheblich vermindert werden.

Besonders bevorzugt wird ein Ausführungsbeispiel der Einrichtung, das sich dadurch auszeichnet, daß dem in der ersten Hydraulikeinrichtung zugeordneten Strompfad ein erster Druckregler und dem der zweiten Hydraulikeinrichtung zugeordneten Strompfad ein zweiter Druckregler zugeordnet ist. Der gewünschte Druck kann also in den beiden Strompfaden unabhängig voneinander eingestellt werden.

Bevorzugt wird ein Ausführungsbeispiel der Einrichtung, das sich dadurch auszeichnet, daß der erste und zweite Druckregler über den Stromregler gekoppelt sind und daß der Stromregler mit einem als Überdruckventil wirkenden Druckpiloten versehen ist, der vorzugsweise mechanisch wirkt. Durch die Kopplung der beiden Druckregler wird erreicht, daß bei einem Ausfall eines der Druckregler der andere mit dem Druck beider Strompfade beaufschlagt wird und quasi als Druckbegrenzungsventil wirkt. Es kann also noch eine zusätzliche Sicherheit gegen plötzliche Druckspitzen und zu hohe Druckwerte im Hydrauliksystem geschaffen werden. Dabei ist es möglich, den Druckpiloten in den Stromregler zu integrieren und damit eine sehr kompakte Bauform zu erreichen.

Die Erfindung wird im folgenden anhand der Zeichnung näher erläutert. Es zeigen:
- Figur 1: einen Hydraulikplan einer Einrichtung zur Vermeidung der Rollneigung eines Fahrzeugs mit einer wenigstens zwei Räder aufweisenden Achse;
- Figur 2: einen Hydraulikplan einer Einrichtung zur Vermeidung der Rollneigung eines Fahrzeugs mit mindestens zwei jeweils wenigsten zwei Räder aufweisenden Achsen;
- Figur 3: ein Prinzipschaltbild eines Umschaltventils;
- Figur 4: ein Prinzipschaltbild eines Sicherheitsventils;
- Figuren 5 und 6: einen Hydraulikplan weiterer Ausführungsvarianten der Einrichtung zur Vermeidung der Rollneigung eines Fahrzeugs gemäß Figur 2;
- Figur 7: ein Prinzipschaltbild mehrerer Ausführungsformen eines Druckreglers;
- Figuren 8 und 9: einen Hydraulikplan weiterer Ausführungsvarianten der Einrichtung zur Vermeidung der Rollneigung eines Fahrzeugs;
- Figur 10: ein Prinzipschaltbild einer Sensoreinrichtung und
- Figur 11: ein Prinzipschaltbild einer weiteren Ausführungsform der Sensoreinrichtung.

Die im folgenden beschriebenen auch als aktive Rollstabilisierung bezeichnete Einrichtung zur Vermeidung der Rollneigung eines Fahrzeugs ist für alle Fahrzeugtypen verwendbar, die wenigstens eine zwei Räder aufweisende Achse umfassen. Es ist also denkbar, die Einrichtung für sogenannte "Trikes" einzusetzen.

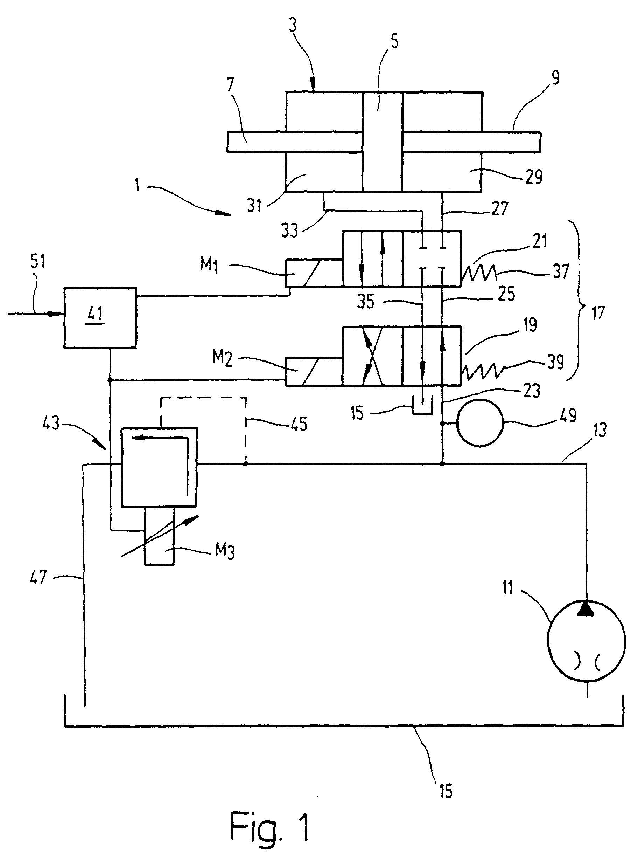

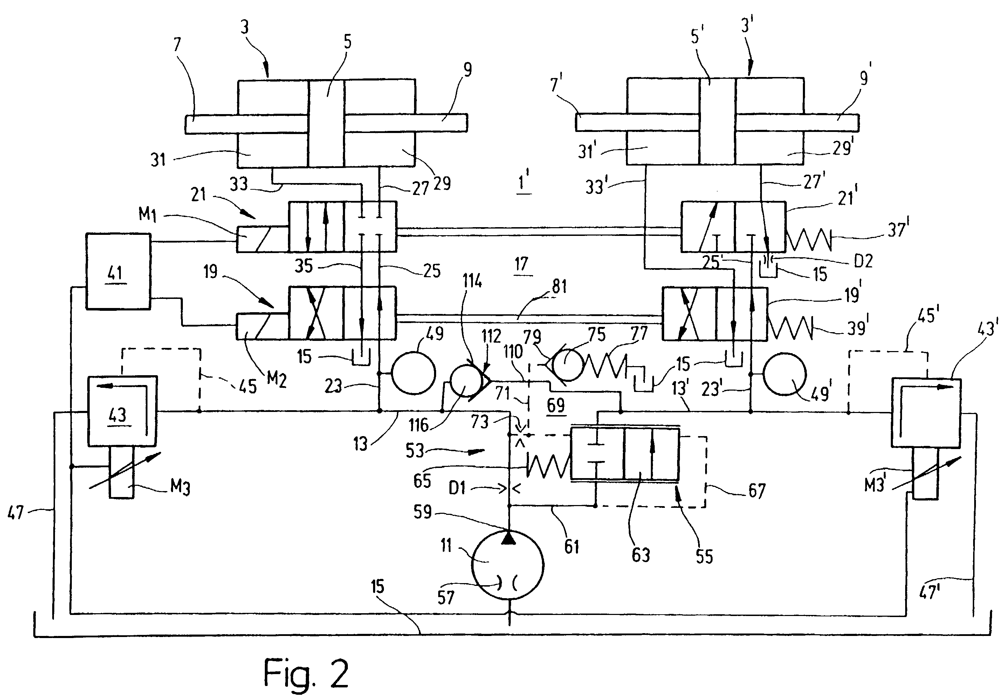

In Figur 1 ist der Hydraulikplan einer Einrichtung für Fahrzeuge dargestellt, die nur eine Achse aufweisen. Die Figur 2 zeigt einen Hydraulikplan für ein Fahrzeug mit zwei Achsen.

Die in Figur 1 dargestellte Einrichtung 1 weist eine Hydraulikeinrichtung 3 auf, die beispielsweise einen Schwenkmotor umfassen kann. Dieser Schwenkmotor ist hier symbolisch durch einen doppelwirkenden Zylinder angedeutet, der einen hin und herbewegbaren Kolben 5 umfaßt, der über Steuerstangen 7 und 9 an hier nicht dargestellten Stabilisatorabschnitten eines Querstabilisators angreift. Diese Abschnitte sind Teil eines Querstabilisators, der im wesentlichen U-förmig ausgebildet ist und dessen Schenkel mit den Enden der Achse beziehungsweise an der Aufhängung der der Achse zugeordneten Räder angreifen. Die U-förmige Basis des Querstabilisators ist aufgetrennt. Die Enden werden über die Hydraulikeinrichtung miteinander verbunden. Die Hydraulikeinrichtung ist auf bekannte Weise so ausgebildet, daß die Stabilisatorabschnitte gegeneinander verdreht werden können, so daß Drehmomente im Querstabilisator erzeugt werden. Diese beeinflussen die Ein- und Ausfederung der Räder.

Die Hydraulikeinrichtung 3 wird von einer Pumpe 11 über geeignete Hydraulikleitungen 13 mit Hydraulikflüssigkeit versorgt. Diese wird aus einem hier nur angedeuteten Tank 15 gefördert. Die Pumpe 11 ist hier als sauggedrosselte Pumpe ausgebildet, die auf ihrer Saugseite eine Drossel aufweist. Ein annährend konstanter Volumenstrom kann auch durch eine Volumenstromregelung einer Konstant- oder Verstellpumpe auf der hydraulischen Seite oder durch Beeinflussung des Pumpenantriebs erzeugt werden. Die Hydraulikflüssigkeit wird über eine Ventileinrichtung 17 an die Hydraulikeinrichtung 3 geliefert. Die Ventileinrichtung umfaßt ein Umschaltventil 19 und Sicherheitsventil 21. Das Umschaltventil 19 ist als 4/2-Wegeventil ausgebildet. Ein erster Leitungsabschnitt 23 führt über einen zweiten Leitungsabschnitt 25 und über einen dritten Leitungsabschnitt 27 in eine erste Druckkammer 29 der Hydraulikeinrichtung 3. Von einer zweiten Druckkammer 31 führt ein vierter Leitungsabschnitt 33 über das Sicherheitsventil 21 zu einem fünften Leitungsabschnitt 35, der über das Umschaltventil 19 zum Tank 15 führt.

Die Ventile der Ventileinrichtung 17 sind hier als elektromagnetisch betätigte Ventile ausgebildet, die eine Vorzugsstellung aufweisen. Das Sicherheitsventil 21 ist mit einer Feder 37 versehen, die den hier nur angedeuteten Steuerkolben des Sicherheitsventils gegen die Kraft einer Magneteinrichtung M1 nach links drängt. Entsprechend ist das Umschaltventil 19 mit einer Magneteinrichtung M2 versehen, die gegen eine Feder 39 wirkt. Diese drängt den hier angedeuteten Steuerkolben des Umschaltventils nach links in eine bevorzugte Funktionsstellung. Diese hier dargestellten Funktionsstellungen des Umschalt- und des Sicherheitsventils werden im inaktivierten beziehungsweise stromlosen Zustand der Magneteinrichtungen M1 und M2 eingenommen. Aus der Darstellung in Figur 1 ist ersichtlich, daß in dieser Stellung der erste Leitungsabschnitt 23 mit dem zweiten Leitungsabschnitt 25 und der fünfte Leitungsabschnitt 35 mit dem Tank 15 verbunden sind. Das Sicherheitsventil 21 ist so ausgelegt, daß hier im stromlosen Zustand die Verbindung zwischen dem zweiten Leitungsabschnitt 25 und dem dritten Leitungsabschnitt 27 sowie zwischen dem vierten Leitungsabschnitt 33 und dem fünften Leitungsabschnitt 35 blockiert ist. Im Betrieb der Einrichtung 1 ist die Magneteinrichtung M1 des Sicherheitsventils 21 aktiviert, so daß der Steuerkolben des Sicherheitsventils gegen die Kraft der Feder 37 nach rechts verlagert wird, so daß, wie durch Pfeile angedeutet, eine hydraulische Verbindung zwischen den Leitungsabschnitten 25 und 27 sowie 33 und 35 besteht. Im fehlerfreien Betrieb der Einrichtung ist diese Hydraulikverbindung kontinuierlich hergestellt.

Spricht also das von der Magneteinrichtung M1 angesteuerte Sicherheitsventil 21 im Normalbetrieb an, so wird eine Hydraulikverbindung zwischen der Pumpe 11 und der ersten Druckkammer 29 über die Hydraulikleitung 13 und über die Leitungsabschnitte 23, 25 und 27 hergestellt. Gleichzeitig ist eine Hydraulikverbindung zwischen der zweiten Druckkammer 31 über die Leitungsabschnitte 33 und 35 zum Tank 15 gegeben.

Wird das Umschaltventil 19 über die Magneteinrichtung M2 angesteuert, so bewegt sich der Steuerkolben des Umschaltventils gegen die Kraft der Feder 39 nach rechts, so daß der erste Leitungsabschnitt 23, wie durch gekreuzte Pfeile angedeutet, mit dem fünften Leitungsabschnitt 35 verbunden ist, während der zweite Leitungsabschnitt 25 mit dem Tank 15 verbunden wird. Auf diese Weise wird die Druckbeaufschlagung des Kolbens 5 umgekehrt. Es wird nun die der ersten Druckkammer 29 gegenüberliegende zweite Druckkammer 31 mit dem von der Pumpe 11 gelieferten Hydrauliköl beaufschlagt. Je nach Druckbeaufschlagung der Druckkammer 29 und 31 bewegt sich der Kolben 5 nach rechts oder links. Durch die Hin- und Herbewegung des Kolbens 5 werden entgegengesetzte Momente in die Stabilisatorabschnitte des Querstabilisators eingeleitet.

Die Ansteuerung der Magneteinrichtungen M1 und M2 erfolgt über eine Steuereinrichtung 41, die hier nur angedeutet ist.

In die Hydraulikleitung 13 ist ein Druckregler 43 integriert, der als Proportional-Druckbegrenzungsventil ausgebildet ist und über den der in der Hydraulikleitung 13 herrschende Druck stufenlos einstellbar ist. Der Druckregler umfaßt eine Magneteinrichtung M3, die gegen den über eine Steuerleitung 45 an einen Steuerkolben angelegten Druck wirkt und bei einem einstellbaren Überdruck Hydrauliköl über eine Entlastungsleitung 47 an den Tank 15 abgibt.

Die Magneteinrichtung M3 kann über eine geeignete Steuerleitung mit Hilfe der Steuereinrichtung 41 angesteuert werden.

Figur 1 zeigt noch einen Drucksensor 49, der den von der Pumpe 11 erzeugten Druck erfaßt. Der Sensor ist hier beispielhaft im ersten Leitungsabschnitt 23 angeordnet. Er ist über eine hier nicht dargestellte elektrische Leitung mit der Steuereinrichtung 41 verbunden, die die Ausgangssignale des Sensors erfaßt und zur Ansteuerung der Ventile, beispielsweise des Sicherheitsventils 21, auswertet.

Figur 1 zeigt schließlich noch, daß in die Steuereinrichtung 41 eine Signalleitung 51 führt, über die Signale eingegeben werden, die beispielsweise die Kurvenlage und Geschwindigkeit des Fahrzeugs wiedergeben, aufgrund dessen über die Hydraulikeinrichtung 3 ein Drehmoment in die Stabilisatorabschnitte eingeleitet wird. Das Drehmoment ist abhängig von dem Federzustand der Räder. Es können in rascher Folge entgegengesetzte Momente erforderlich sein, die durch Umschaltung der in den Druckkammern 29 und 31 gegebenen Druckverhältnisse realisierbar sind. Die Umkehrung der Druckverhältnisse wird mit Hilfe des Umschaltventils 19 erreicht, das über die Steuereinrichtung 41 angesteuert wird. Durch eine entsprechende Aktivierung des Umschaltventils 19 können also Momente in die Stabilisatorabschnitte eingeleitet werden, die einem Rollen beziehungsweise Wanken des Fahrzeugs entgegenwirken.

Figur 2 zeigt einen Hydraulikplan einer Einrichtung zur Verminderung der Rollneigung für ein Fahrzeug mit zwei Achsen. Es ist ersichtlich, daß sich auf der linken Seite der Darstellung die Komponenten wiederholen, die bereits anhand von Figur 1 erläutert wurden. Die Einrichtung 1 ist beispielsweise so ausgebildet, daß die anhand von Figur 1 erläuterten Teile hier einer Vorderachse des hier nicht dargestellten Fahrzeugs zugeordnet sind. Eine zweite Hydraulikeinrichtung 3', die nahezu identisch aufgebaut ist, wie die in Figur 1 erläuterte Hydraulikeinrichtung 3 und die der Hinterachse zugeordnet ist, umfaßt einen Kolben 5' und Steuerstangen 7' und 9'. Die Hydraulikeinrichtung 3' kann also wie die in Figur 1 beschriebene Hydraulikeinrichtung 3 auch einen Schwenkmotor umfassen, der hier lediglich zur Veranschaulichung der Wirkungsweise der Einrichtung 1' als doppelwirkender Zylinder dargestellt ist. Die erste Druckkammer 29' ist über einen dritten Leitungsabschnitt 27' und über das Sicherheitsventil 21' in der hier dargestellten Funktionsstellung mit dem Tank 15 verbunden. Ebenso ist die zweite Druckkammer 31' über einen Leitungsabschnitt 33' und über das Umschaltventil 19' mit dem Tank 15 verbunden. In dem hier dargestellten stromlosen Zustand der Ventileinrichtung 17 sind also beide Druckkammern 29' und 31' der Hydraulikeinrichtung 3' mit dem Tank verbunden, so daß in die Stabilisatorabschnitte keine Momente eingeleitet werden können.

In dem hier dargestellten Funktionszustand wird der Leitungsabschnitt 23', der sich über das Umschaltventil 19' in den Leitungsabschnitt 25' fortsetzt, durch das Sicherheitsventil 21' abgeschlossen. Die hydraulische Verbindung zwischen der Pumpe 11 und der Hydraulikeinrichtung 3' ist also in der hier dargestellten Funktionsstellung der Ventileinrichtung 17 unterbrochen.

Figur 2 zeigt die Ventileinrichtung 17, also auch das Sicherheitsventil 21' und das Umschaltventil 19' im inaktivierten Zustand, der sich beispielsweise bei einem Stromausfall ergibt oder dann, wenn über die Steuereinrichtung 41 ein Fehlerfall festgestellt wird und die Ventileinrichtung von der Stromversorgung abgetrennt wird.

Im normalen Betrieb wird jedoch der Steuerkolben des Sicherheitsventils 21' gegen die Kraft der Feder 37' nach rechts bewegt, so daß der Leitungsabschnitt 25' mit dem Leitungsabschnitt 27' verbunden ist. In dieser Funktionsstellung ist das Umschaltventil 19' voll funktionsfähig. Im aktivierten Zustand der Ventileinrichtung wird die Hydraulikleitung 13' über den Leitungsabschnitt 23', das Umschaltventil 19', den Leitungsabschnitt 25', das Sicherheitsventil 21' und über den Leitungsabschnitt 27' mit der ersten Druckkammer 29' der Hydraulikeinrichtung 3' verbunden. Gleichzeitig ist die zweite Druckkammer 31' über den Leitungsabschnitt 33' und über das Umschaltventil 19' mit dem Tank 15 verbunden. Ein auf der hydraulischen Leitung 13' herrschender Druck bewegt also den Kolben 5' nach links, da die linke Druckkammer 31' entlastet ist.

Bei einer Aktivierung des Umschaltventils 19 wird, sofern Druck auf der Hydraulikleitung 13' gegeben ist, die zweite Druckkammer 31' über den Leitungsabschnitt 23', das Umschaltventil 19' und über den Leitungsabschnitt 33' mit Druck beaufschlagt. Gleichzeitig ist die erste Druckkammer 29' über den Leitungsabschnitt 27', das Sicherheitsventil 21', den Leitungsabschnitt 25' und über das Umschaltventil 19' mit dem Tank 15 verbunden und damit druckentlastet. Tritt nun beispielsweise der Fall ein, daß sich das Umschaltventil 19 in dieser Lage, also in seiner rechten Endlage, verklemmt und somit nicht mehr schaltbar wäre, so kann der in der Druckkammer 31' und dem Leitungsabschnitt 33' herrschende Druck über den Druckregler 43' abgebaut werden.

Aus Figur 2 ist ersichtlich, daß die Sicherheitsventile 21 und 21' und die Umschaltventile 19 und 19' der Ventileinrichtung 17 über eine Stange 81 starr gekoppelt sind. Die Stange 81 dient hier lediglich zur Verdeutlichung der Kopplung der Umschaltventile. Die Aktivierung und Deaktivierung der Sicherheitsventile erfolgt also -ebenso wie die der Umschaltventile- jeweils gleichzeitig. Es zeigt sich jedoch, daß die Sicherheits- und Umschaltventile der Ventileinrichtung 17 untereinander mechanisch völlig entkoppelt sind. Die sehr häufigen Umschaltfunktionen des Umschaltventils, die zu einem Verschleiß führen können, beeinträchtigen also in keiner Weise das Sicherheitsventil. Dies gilt selbstverständlich auch für die in Figur 1 dargestellte Einrichtung. Es können also am Umschaltventil 19, 19' auftretende Fehlfunktionen durch das Sicherheitsventil 21, 21' abgefangen werden. Besonders vorteilhaft ist, daß eine Fehlfunktion des Sicherheitsventils 21, 21' zu keinem kritischen Fahrzustand führen kann.

Figur 2 zeigt noch, daß in dem Leitungsabschnitt 23', wie im linken Teil der Einrichtung 1' der Figur 2, ein Drucksensor 49' vorgesehen ist, der über eine hier nicht dargestellte Leitung mit der Steuereinrichtung 41 verbunden ist.

In die hydraulische Leitung 13' ist auch hier ein Druckregler 43' eingebracht, der eine Magneteinrichtung M3' umfaßt, die gegen den Druck wirkt, der in der Hydraulikleitung 13' gegeben ist und über die Steuerleitung 45' an den Druckregler 43' angelegt wird.

Die in Figur 2 links dargestellten Elemente, die Hydraulikeinrichtung 3, das Sicherheitsventil 21 und das Umschaltventil 19 der Ventileinrichtung 17 sind der Vorderachse zugeordnet. Ihr Aufbau ist identisch wie bei der anhand von Figur 1 erläuterten Einrichtung, so daß hier nicht näher auf diesen Aufbau eingegangen wird. Gleiche Teile sind mit gleichen Bezugsziffern versehen. Entsprechend sind mit einem Strich gekennzeichnete Bezugsziffern für die Teile der Hinterachse gewählt, die in Figur 2 rechts dargestellt sind.

Der Hydraulikplan gemäß Figur 2 zeigt, daß die Hydraulikeinrichtungen 3 und 3' der Vorder- und Hinterachse von einer einzigen Pumpe 11 mit Hydraulikflüssigkeit versorgt werden. Um den von der Pumpe gelieferten Fluidstrom auf die Vorder- und Hinterachse beziehungsweise auf die zugehörigen Hydraulikeinrichtungen 3 und 3' zu leiten ist eine Stromteilereinrichtung 53 vorgesehen, die einen Stromregler 55 umfaßt. Der Stromregler 55 ist mit einem als Druckpilot bezeichneten Überdruckventil 69 ausgestattet, das über eine Steuerleitung 71 und eine Drossel 73 mit der Hydraulikleitung 13 und damit mit dem Druckauslaß 59 der Pumpe 11 verbunden ist. Druckpiloten der hier angesprochenen Art sind bekannt. Sie weisen beispielsweise eine Kugel 75 auf, die durch eine Feder 77 gegen einen Ventilsitz 79 gepreßt wird. Bei einem Überdruck, der über einen durch die Feder 77 definierten Wert liegt, hebt die Kugel 75 vom Ventilsitz 79 ab, so daß öl zum Tank 15 abströmen kann. Die Pumpe 11 ist hier mit einer Saugdrossel 57 versehen, die den aus dem Tank 15 geförderten Fluidstrom auf einem vorgebbaren Maximalwert hält.

Die Hydraulikleitung 13 ist hier über eine Drossel D1 mit dem Druckauslaß 59 der Pumpe 11 verbunden. Ein Leitungsabschnitt 61 führt unmittelbar vom Druckauslaß 59 zum Stromregler 55, dessen Steuerkolben 63 einerseits mit der Kraft einer Feder 65 und dem in der Steuerleitung 71 herrschenden Druck beaufschlagt ist, andererseits über eine Steuerleitung 67 mit dem am Druckauslaß 59 gegebenen Druck. Im drucklosen Zustand trennt der Steuerkolben 63 den Leitungsabschnitt 61 von der Hydraulikleitung 13', die der Versorgung der Hinterachse dient.

Wird die Pumpe 11 in Betrieb genommen, so wird der Steuerkolben 63 schließlich durch den über die Steuerleitung 67 angelegten Druck gegen die Kraft der Feder 65 und des in der Steuerleitung 71 herrschenden Drucks nach links in die Regelposition verlagert. Durch die Verlagerung des Steuerkolbens 63 wird eine Fluidverbindung vom Druckauslaß 59 der Pumpe 11 über den Leitungsabschnitt 61, über den Stromregler 55 zur Hydraulikleitung 13' freigegeben, so daß nun die Druckkammern 29' und 31' der Hydraulikeinrichtung 3', je nach Stellung des Umschaltventils 19', wechselseitig mit Druck beaufschlagt werden können.

Die Pumpe 11 arbeitet während des Fahrens vorzugsweise im Abregelbereich, das heißt sie fördert einen konstanten Volumenstrom. Der Stromregler 55 stellt vorzugsweise primär der Hydraulikeinrichtung 3, also der Vorderachse, einen konstanten Volumenstrom zur Verfügung.

Die Druckregler 43 und 43' sind so ausgelegt, daß über die Steuereinrichtung 41 ein Druck von circa 0 bar bis 200 bar einstellbar ist. Dabei wird sichergestellt, daß der an die Vorderachse gelieferte Druck, der also auch an die Hydraulikeinrichtung 3 geliefert wird, zumindest gleich oder größer ist als der an die Hydraulikeinrichtung 3' angelegte Druck, der für die Hinterachse bereitgestellt wird.

Der Hydraulikplan gemäß Figur 2 läßt erkennen, daß der Hydraulikeinrichtung 3 der Vorderachse und der Hydraulikeinrichtung 3' der Hinterachse getrennte Druckregler 43 und 43' zugeordnet sind, die mit den hydraulischen Leitungen 13 beziehungsweise 13' in Hydraulikverbindung stehen und die von der Steuereinrichtung 41 angesteuert werden und bei Überschreitung des vorgegebenen Drucks Hydrauliköl über die Entlastungsleitungen 47 und/oder 47' zum Tank 15 abströmen lassen.

Die Druckregler 43 und 43' sind hier so gekoppelt, daß bei einem Ausfall eines der Druckregler der andere als Druckbegrenzungsventil für das gesamte System, also auch für die andere Hydraulikleitung dient. In der in Figur 2 dargestellten Einrichtung 1' ist eine Kopplung über die Stromteilereinrichtung 53 beziehungsweise über den Stromregler 55 im Zusammenwirken mit dem als Druckpilot bezeichneten Überdruckventils 69 vorgesehen. Die Funktionsweise dieser Kopplung ist die folgende:

Nach dem Anlaufen der Pumpe 11 ist zunächst die Verbindung zwischen dem Leitungsabschnitt 61 und der hydraulischen Leitung 13' der Hinterachse durch den Stromregler 55 beziehungsweise dessen Kolben 63 unterbrochen. Das von der Pumpe bereitgestellte Hydrauliköl wird also über die Hydraulikleitung 13 der Hydraulikeinrichtung 3 zugeführt. Bei steigender Druckdifferenz an der Drossel D1 innerhalb des Hydrauliksystems spricht schließlich der Stromregler 55 an, wobei der Steuerkolben 63 die Hydraulikverbindung zur Hydraulikleitung 13' freigibt. Damit wird der zweite Druckregler 43' mit Öl versorgt. Die beiden Druckregler 43 und 43' sind so eingestellt, daß der für die Vorderachse bereitgestellte Druck gleich oder größer als der der Hinterachse ist. Fällt nun beispielsweise der Druckregler 43' aus und steigt aufgrund eines Fehlers der Druck in dem der Hinterachse zugeordneten Hydrauliksystem an, so steigt auch der im Leitungsabschnitt 61 gegebene Druck an, der sich dann über die Leitung 13 zum ersten Druckregler 43 fortsetzt. Der Druckregler 43 kann nun ansprechen und einen Überdruck über die Entlastungsleitung 47 abbauen. Es zeigt sich also, daß der Teil der Hydraulik, der der Hinterachse beziehungsweise der Hydraulikeinrichtung 3' zugeordnet ist, im Störfall über den Druckregler 43, der grundsätzlich der Vorderachse beziehungsweise der Hydraulikeinrichtung 3 zugeordnet ist, mitüberwacht wird.

Umgekehrt wird deutlich, daß bei einem Ausfall des Druckreglers 43 der Hydraulikeinrichtung 3 ein auf einem Störfall beruhender Überdruck über den Leitungsabschnitt 61 auf die hydraulische Leitung 13' übertragen und damit vom zweiten Druckregler 43' erfaßt wird. Dieser kann den Überdruck abbauen und über die Entlastungsleitung 47' Hydrauliköl abströmen lassen, weil der Stromregler mit dem Überdruckventil 69 ausgestattet ist, das über die Steuerleitung 71, die Drossel 73 mit der Hydraulikleitung 13 und damit mit dem Druckauslaß 59 der Pumpe 11 verbunden ist. Der bei einem Störfall der Hydraulikeinrichtung 3 in der Steuerleitung 71 herrschende Druck ist durch die Drosseln D1 und 73 kleiner als der an der Steuerleitung 67 anstehende Druck, der dem Pumpendruck entspricht, wodurch ein Schalten des Stromreglers 55 möglich und eine Verbindung zwischen der Leitung 61 und der Hydraulikleitung 13' gegeben ist.

In Figur 2 wird auch noch der folgende Aspekt deutlich: Die Sicherheitsventile 21 und 21' sind, wie bei dem Ausführungsbeispiel in Figur 1, in unmittelbarer Nähe zur Hydraulikeinrichtung 3 beziehungsweise 3' angeordnet. Fehler in den übrigen Bauteilen, die aus den Hydraulikplänen der Figuren 1 und 2 ersichtlich sind und zu undefinierten Zuständen führen, können von dem Sicherheitsventil 21 beziehungsweise 21' abgefangen werden. Durch die Sicherheitsventile 21, 21' ist also eine fail-safe-Funktion gegeben.

Bei dem Ausführungsbeispiel gemäß Figur 1 und bei dem Teil der Einrichtung 1', der der Vorderachse zugeordnet ist, wird der Kolben 5 der Hydraulikeinrichtung 3 hydraulisch festgelegt. Dies geschieht dadurch, daß das Sicherheitsventil 21 in die in den Figuren 1 und 2 dargestellte Position verlagert wird, wodurch die Leitungsabschnitte 33 und 27 von dem übrigen System abgetrennt werden. Da hier keine Hydraulikströmung mehr möglich ist, wirkt die Hydraulikeinrichtung 3 als starre Kopplung der zugehörigen Stabilisatorabschnitte.

Im Bereich der Hinterachse wird in einem Störungsfall das Sicherheitsventil 21' in die in Figur 2 dargestellte Position verlagert. Dies erfolgt durch die Feder 37', die den Steuerkolben der Sicherheitsventile 21 und 21' nach links verlagert. Dadurch wird -in der in Figur 2 dargestellten stromlosen Position des Umschaltventils 19'- die Hydraulikeinrichtung 3' beidseitig mit dem Tank 15 verbunden. Das heißt, beide Druckkammern 29' und 31' sind von der Pumpe 11 getrennt und drucklos. Es ist denkbar, hier eine freie Beweglichkeit des Kolbens 5' zuzulassen und damit eine Entkopplung der Hydraulikeinrichtung 3'. Es ist aber auch möglich, wenigstens eine Hydraulikdrossel einzubringen, die eine freie Abströmung der Hydraulikflüssigkeit aus den Druckkammern verhindern und damit eine Dämpfung bewirken. Eine derartige Drossel ist in Figur 2 angedeutet und mit dem Bezugszeichen D2 versehen. Die der Hydraulikeinrichtung 3' zugeordneten Stabilisatorabschnitte sind damit nicht starr miteinander gekoppelt, aber auch nicht vollständig entkoppelt. Es können also noch Drehmomente von einem Stabilisatorabschnitt über die Hydraulikeinrichtung 3' auf den anderen Stabilisatorabschnitt übertragen werden, so daß eine Restfunktion des Querstabilisators gewährleistet ist. Allerdings werden nicht mehr aktiv Drehmomente in den Querstabilisator beziehungsweise in dessen Abschnitte eingeleitet. Eine vollständige Entkopplung des Querstabilisators ist durch den Wegfall der Drossel D2 möglich.

In Figur 1 ist im Störungsfall durch das Sicherheitsventil 21 eine starre Kopplung gegeben, da die Leitungsabschnitte 27 und 33 abgeschlossen sind. Denkbar ist es jedoch auch hier, eine völlige Entkopplung oder eine gedämpfte Entkopplung, wie eben anhand von Figur 2 beschrieben, vorzusehen.

In beiden Fällen ist gewährleistet, daß das Sicherheitsventil durch die getrennte Ausführung vom Umschaltventil unabhängig ist und damit eine sehr hohe Sicherheitsfunktion zeigt.

Diese entkoppelte Ausführung der beiden Ventile ist auch an der Ventileinrichtung 17 gemäß Figur 2 vorgesehen. Auch dort sind zwar die Sicherheitsventile 21 und 21' untereinander und die Umschaltventile 19 und 19' untereinander starr gekoppelt. Sie sind jedoch völlig getrennt und unabhängig voneinander ausgebildet. Das heißt, häufige Umschaltvorgänge beeinträchtigen das getrennte Sicherheitsventil nicht, so daß sich hier ein hoher Sicherheitsstandard ergibt.

Die Einrichtung 1' gemäß Figur 2 zeichnet sich im übrigen dadurch aus, daß die Stromteilereinrichtung 53 durch den mit Druckpilot versehenen Stromregler geringe Schwingungs- und Toleranzprobleme zeigt. Dadurch wird wiederum ein großer Beitrag zur Sicherheit der hier dargestellten Einrichtung geleistet. Schließlich sind die der Hinter- und Vorderachse zugeordneten Druckregler 43 und 43' so gekoppelt, daß bei einem Ausfall eines der Druckregler der andere noch das gesamte System im Störfall gegen einen zu hohen Druck schützen kann.

In dem in Figur 2 dargestellten Ausführungsbeispiel der Einrichtung 1' ist eine Hydraulikleitung 110 vorgesehen, die eine Ventileinheit 112 aufweist. Die Hydraulikleitung 110 dient zur Herstellung einer hydraulischen Verbindung zwischen den den Hydraulikeinrichtungen 3 und 3' bereitgestellten Druckniveaus. Die Hydraulikleitung 110 überbrückt also die Stromteilereinrichtung 53. Dazu ist die Hydraulikleitung 110 hier mit den die Hydraulikeinrichtungen 3 und 3' mit einem Ölstrom versorgenden Hydraulikleitungen 13 und 13' verbunden, in denen das gleiche Druckniveau herrscht, wie in den ihnen jeweils zugeordneten Druckreglern 43 beziehungsweise 43'. Die Ventileinheit 112 ist vorzugsweise als mechanisches Rückschlagventil ausgebildet, das einen Ventilsitz 114, in den eine Kugel 116 gepreßt wird, umfaßt. Derartige Ventileinheiten sind einfach aufgebaut und funktionsbeständig. Die Ventileinheit 112 verbindet die Druckniveaus der beiden Hydraulikeinrichtungen 3, 3' vorzugsweise immer dann, wenn der an der Hydraulikeinrichtung 3 anliegende Druck kleiner ist als der an der Hydraulikeinrichtung 3' anliegende Druck. Durch die als Rückschlagventil ausgebildete Ventileinheit ist also eine die beiden Druckniveaus miteinander vergleichende Kontroll- und Steuereinrichtung realisiert, die selbständig eine Druckregulierung vornimmt. Hierdurch ist in der in Figur 2 gezeigten Schaltfunktion der Ventileinheit 112 jederzeit gewährleistet, daß das Druckniveau der Hydraulikeinrichtung 3 zumindest dem Druck der Hydraulikeinrichtung 3' entspricht oder größer ist.

Aus dem oben Gesagten wird deutlich, daß durch die Ventileinheit ein Ausgleich der Fertigungs- und Einstelltoleranzen der einzelnen Baugruppen, beispielsweise der Druckregler 43, 43', der Pumpe 11 und der Stromteilereinrichtung, möglich ist, die zu einer Beeinflussung der Druckniveaus führen. Ferner werden unsachgemäß vorgenommene und nicht erwünschte Einstellungen der Druckregler durch die Fluidverbindung kompensiert.

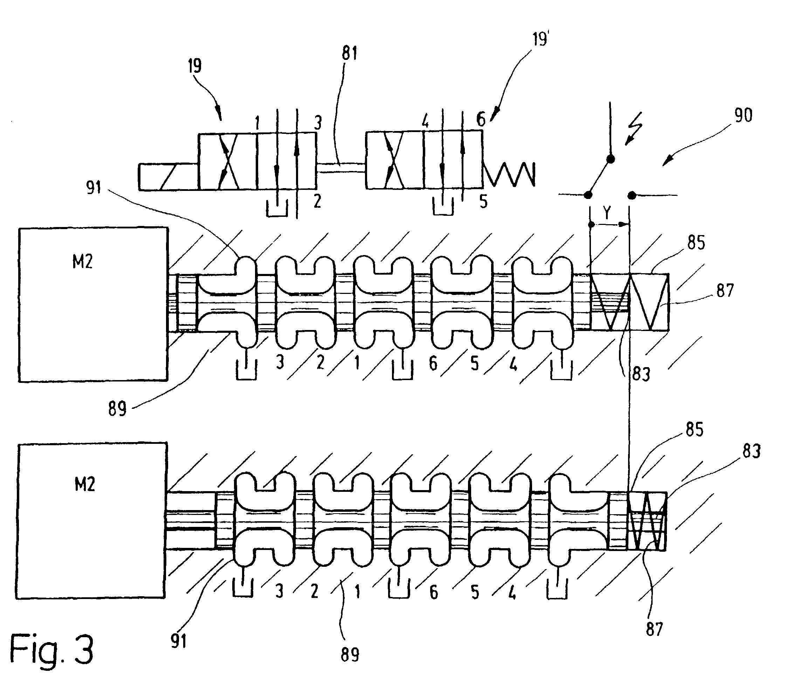

In Figur 3 ist eine Prinzipskizze eines Umschaltventils gemeinsam mit dem hydraulischen Symbol wiedergegeben. In der Darstellung ist oben das hydraulische Symbol; darunter eine erste Funktionsstellung des Umschaltventils und ganz unten eine zweite Funktionsstellung des Umschaltventils wiedergegeben. In Figur 3 ist die in Figur 2 wiedergegebene Ventileinrichtung mit den Umschaltventilen 19 und 19' dargestellt. In der Prinzipskizze der Figur 2 sind die beiden Teilventile zur Darstellung der Funktion getrennt wiedergegeben, wobei sie hier über eine Stange 81 starr miteinander gekoppelt sind.

Bei der tatsächlichen Realisierung der Umschaltventile 19 und 19' werden die Steuerkolben beider Ventile vorteilhafterweise zu einem Steuerkolben 83 zusammengefaßt, der in einer zylindrischen Bohrung 85 gegen die Kraft einer Feder 87 geführt ist. Der Feder wirkt eine Magneteinrichtung M2 entgegen. In die Wandung der Bohrung 85 sind verschiedene Nuten eingebracht, die hier mit Zahlen versehen sind, die den Ein- und Ausgängen der Umschaltventile 19 und 19'entsprechen. Die oberen Anschlüsse des Umschaltventils 19 sind mit 1 und 3, die des Umschaltventils 19' mit 4 und 6 gekennzeichnet. Die unteren Anschlüsse des Umschaltventils 19 sind mit dem Tanksymbol und der Ziffer 2, die des Umschaltventils 19' ebenfalls mit dem Tanksymbol und der Ziffer 5 gekennzeichnet.

Die entsprechenden hydraulischen Anschlüsse werden durch die Wandung 89 des Gehäuses des Umschaltventils, das hier nicht im einzelnen dargestellt ist, geführt.

In der oberen Darstellung befindet sich der Steuerkolben 83 in inaktivem Zustand. Das heißt, die Magneteinrichtung M2 ist nicht aktiviert, so daß die Feder 87 den Steuerkolben 83 nach links bewegen kann. Der Steuerkolben ist mit Steuerflächen versehen, die von Steuerkanten begrenzt werden und -in Abhängigkeit von der Stellung des Steuerkolbens- die als Zu- und Abführung dienenden Ringnuten 91 entsprechend voneinander trennen oder miteinander verbinden.

In der in Figur 3 oben dargestellten Funktionsstellung des Steuerkolbens 83 sind die Anschlüsse 3 und 2 des Umschaltventils 19 und die Anschlüsse 6 und 5 des Umschaltventils 19' miteinander verbunden. Gleichzeitig ist der Anschluß 1 und der Anschluß 4 mit dem Tank verbunden. Es ergibt sich also quasi eine geradlinige Durchführung der Hydraulikverbindungen in den beiden Umschaltventilen 19 und 19'.

Wird die Magneteinrichtung M2 aktiviert, so wird der Steuerkolben 83 gegen die Kraft der Feder 87 nach rechts bewegt (siehe untere Darstellung), so daß sich nun die folgenden Hydraulikverbindungen ergeben:

Innerhalb des Umschaltventils 19 ist der Anschluß 3 mit dem Tank verbunden; die Anschlüsse 1 und 2 sind untereinander verbunden. Innerhalb des Umschaltventils 19' ist der Anschluß 6 mit dem Tank verbunden und die Anschlüsse 5 und 4 sind untereinander verbunden. Dies wird in dem hydraulischen Symbol oben in Figur 3 durch die gekreuzten Pfeile angedeutet. Es wird also sichergestellt, daß die Anschlüsse der beiden Druckkammern 29 und 31 beziehungsweise 29' und 31' miteinander vertauscht werden, wenn das Umschaltventil anspricht. Dadurch werden entgegengesetzte Momente durch die Hydraulikeinrichtungen 3 beziehungsweise 3' in die zugehörigen Stabilisatorabschnitte eingeleitet.

Zur Erfassung der Stellung des Steuerkolbens 83 der über die Stange 81 gekoppelten Umschaltventilen 19 und 19' kann eine elektrische oder elektronische Erfassungeinrichtung 90 vorgesehen sein, die den Schieberhub ermittelt. In dem in Figur 3 gezeigten Ausführungsbeispiel ist die Erfassungseinrichtung im Bereich der Bohrung 85, an deren rechten Ende, angeordnet. Am rechten Ende der Bohrung 85 liegt der Tankdruck an. Die maximale Wegstrecke die der Steuerkolben zurücklegen kann, ist mit einem Y gekennzeichnet. Bei Aktivierung der Magneteinrichtung M2 wird der Steuerkolben 83 nach rechts verlagert. Die zurückgelegte Wegstrecke beziehungsweise die momentane Position des Steuerkolbens wird über eine geeignete Sensorik, beispielsweise einen Piezoaufnehmer, ermittelt. Durch die Erfassungseinrichtung ist es jederzeit möglich, die augenblickliche Schaltstellung des Steuerkolbens zu ermitteln, der von außen uneinsehbar innerhalb eines Gehäuses angeordnet ist. Durch die unmittelbare Feststellung der Steuerkolbenposition kann beispielsweise ein Klemmen des Steuerkolbens erkannt und angezeigt werden. Die Erfassungseinrichtung 90 übermittelt dies in Form eines elektrischen Signals beispielsweise an die Steuereinrichtung 41, die nach Betätigung des Magnetventils davon ausgeht, daß der Steuerkolben sich in seiner Steuerposition befindet. Dies verbessert insbesondere die Betriebssicherheit der Einrichtungen 1 und 1'.

Nach allem wird deutlich, daß die in Figur 3 dargestellte Weg-Erfassungseinrichtung 90 auch für die Sicherheitsventile 21 und 21' eingesetzbar ist.

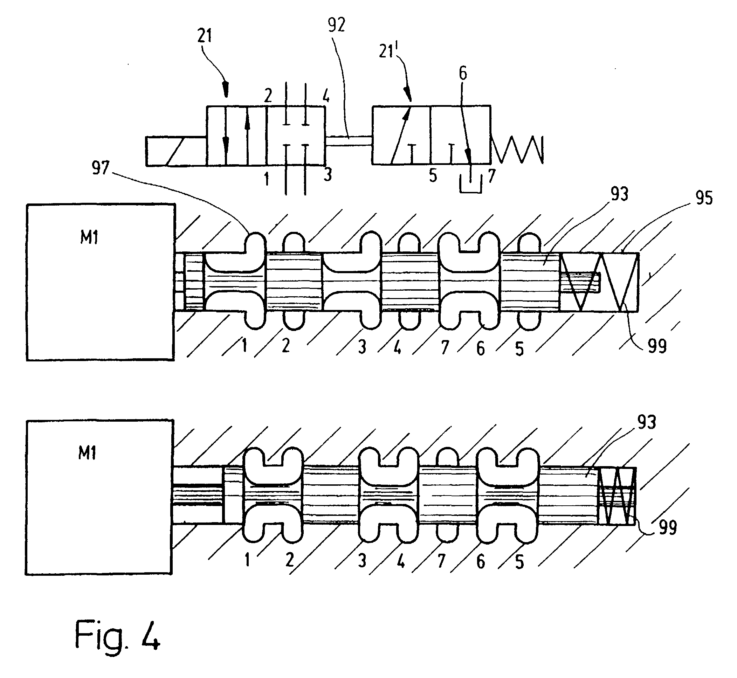

Figur 4 zeigt die Sicherheitsventile 21 und 21', die in Figur 2 dargestellt sind. Zur Verbindung der beiden Teilventile ist auch hier eine Stange 92 vorgesehen, die eine starre Kopplung der beiden Steuerkolben bewirkt.

Realisiert wird ein derartiges Sicherheitsventil vorteilhafterweise derart, wie in den beiden unteren Darstellungen gemäß Figur 4 ersichtlich. Es wird ein durchgehender Kolben 93 in einer zylindrischen Bohrung 95 untergebracht, in deren Wandung Ringnuten 97 eingebracht sind, die mit hier nicht dargestellten hydraulischen Anschlüssen zusammenwirken. Der Kolben 93 weist Steuerbünde und Steuerkanten auf, durch die die Ringnuten in unterschiedlicher Weise miteinander verbunden werden können.

Die Ringnuten 97 sind den Anschlüssen der Sicherheitsventile zugeordnet, die hier mit Ziffern gekennzeichnet sind. Das Sicherheitsventil 21 weist zwei obere Anschlüsse 2 und 4 und zwei untere Anschlüsse 1 und 3 auf, während das Sicherheitsventil 21' einen oberen Anschluß 6 und zwei untere Anschlüsse 5 und 7 aufweist, wobei der Anschluß 7 mit dem Tank verbunden ist, was hier durch das Tanksymbol verdeutlicht ist.

Das Sicherheitsventil weist hier eine Magneteinrichtung M1 auf, die auf den Kolben 93 wirkt, der bei Aktivierung der Magneteinrichtung M1 gegen die Kraft einer Feder 99 nach rechts verlagert wird. In der oberen Prinzipskizze ist der Kolben 93 in seiner inaktivierten Stellung dargestellt. Das heißt, die Magneteinrichtung M1 ist stromlos, so daß die Feder 99 den Kolben 93 nach links drücken kann. In dieser Funktionsstellung ist, wie aus der Prinzipskizze gemäß Figur 4 erkennbar, eine hydraulische Trennung der Anschlüsse 1 und 2 sowie der Anschlüsse 3 und 4 gegeben, wie dies im Sicherheitsventil 21 dargestellt ist. Gleichzeitig ist eine hydraulische Trennung zwischen den Anschlüssen 6 und 5, andererseits eine hydraulische Verbindung zwischen den Anschlüssen 7 und 6 gegeben. Im aktivierten Zustand des Sicherheitsventils drückt die Magneteinrichtung M1 den Kolben 93 gegen die Kraft der Feder 99 nach rechts, so daß eine Verbindung zwischen den Anschlüssen 1 und 2 sowie 3 und 4 des Sicherheitsventils 21 gegeben ist. Gleichzeitig ergibt sich eine hydraulische Trennung der Anschlüsse 7 und 6 sowie eine hydraulische Verbindung zwischen den Anschlüssen 6 und 5 des Sicherheitsventils 21'.

Nach allem wird deutlich, daß die Sicherheitsventile 21 und 21' sowie die Umschaltventile 19 und 19' zusammengefaßt und einen gemeinsamen Kolben aufweisen können. Diese Zusammenfassung gilt jeweils für die Umschalt- und Sicherheitsventile untereinander. Es findet jedoch keinerlei Kopplung zwischen den Umschaltventilen und den Sicherheitsventilen statt, so daß eine Trennung der Umschalt- und Sicherheitsfunktion gegeben ist. Eine Fehlfunktion der Umschaltventile kann sich damit nicht negativ auf die Funktionssicherheit der Sicherheitsventile auswirken.

Nach allem wird deutlich, daß die hier beschriebene Einrichtung einerseits bei zweiachsigen Fahrzeugen, insbesondere Pkws Verwendung findet, andererseits auch für Fahrzeuge mit einer Achse und mindestens zwei Räder, beispielsweise für sogenannte Trikes. Ohne weiteres kann die hier beschriebene Einrichtung auch bei mehrachsigen Fahrzeugen eingesetzt werden.

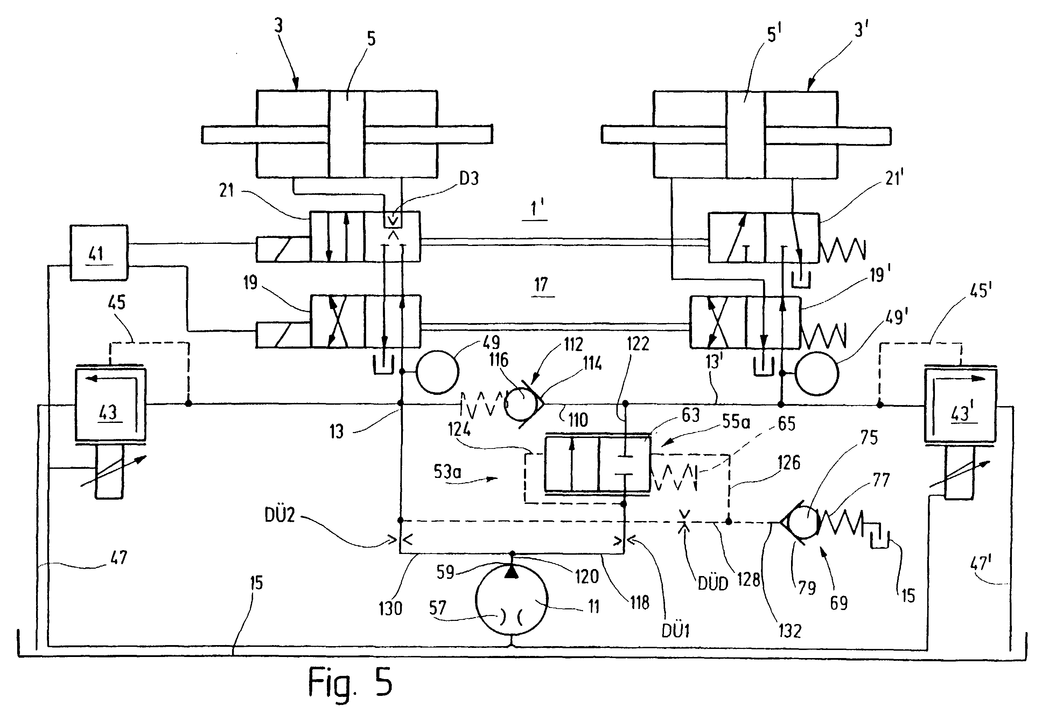

Figur 5 zeigt einen Hydraulikplan einer Ausführungsvariante der Einrichtung 1' zur Verminderung der Rollneigung für ein Fahrzeug mit zwei Achsen. Teile, die mit denen in Figur 2 übereinstimmen, sind mit gleichen Bezugszeichen versehen, so daß insofern zu deren Beschreibung zu Figur 2 verwiesen wird. Im folgenden wird lediglich auf die Unterschiede eingegangen. Der Hydraulikplan gemäß Figur 5 zeigt eine Stromteilereinrichtung 53a, die einen Stromregler 55a umfaßt, der im Fluidpfad zwischen der Pumpe 11 und der der Hinterachse zugeordneten Hydraulikeinrichtung 3' angeordnet ist. Der Stromregler 55a ist über eine Hydraulikleitung 118, eine als hydraulischer Widerstand dienende Düse DÜ1 und einen Leitungsabschnitt 120 mit dem Druckauslaß 59 der Pumpe 11 sowie über einen Leitungsabschnitt 122 mit der die Hydraulikeinrichtung 3' versorgenden Hydraulikleitung 13' verbunden. Der im drucklosen Zustand der Pumpe 11 dargestellte Stromregler 55a weist einen Steuerkolben 63 auf, an dessen beiden Stirnseiten jeweils ein Druck anliegt. Die eine Stirnseite des Steuerkolbens 63 wird mit einem Druck beaufschlagt, der -in Strömungsrichtung des Fluids betrachtet- hinter der Düse DÜ1 an der Hydraulikleitung 118 abgegriffen wird. Die andere Stirnseite des Steuerkolbens 63 ist über Steuerleitungen 126 und 128 mit der Hydraulikleitung 13, die die der Vorderachse zugeordnete Hydraulikeinrichtung 3 mit unter Druck stehendem Hydrauliköl versorgt, verbunden. Die Hydraulikleitung 13 ist wiederum über eine Düse DÜ2 und einen Leitungsabschnitt 130 mit dem Druckauslaß 59 der Pumpe 11 verbunden. Wird die Pumpe 11 in Betrieb genommen, so werden die an den Stirnseiten des Steuerkolbens 63 anliegenden Drücke mittels dem Steuerkolben 63 miteinander verglichen. Ist der in der Steuerleitung 124 herrschende Druck größer als der in der Steuerleitung 126 anliegende Druck, so wird der Steuerkolben 63 nach rechts verlagert. Durch die Verlagerung des Steuerkolbens 63 nach rechts wird eine Fluidverbindung vom Druckauslaß 59 der Pumpe 11 zur Hydraulikleitung 13' freigegeben. Hierdurch kann -wie oben beschrieben- ein Drehmoment auf den Querstabilisator der Hinterachse aufgebracht werden. Die Hydraulikleitung 13 ist vom Stromregler 55a abgekoppelt und wird ständig mit Hydrauliköl versorgt. Ist der Druck in der Steuerleitung 126 größer als in der Steuerleitung 124, so wird der Steuerkolben 63 nach links in seine Regelposition verlagert und die Strömungsverbindung vom Druckauslaß 59 zur Hydraulikleitung 13' unterbrochen.

Der Druck in den Hydraulikleitungen 13 und in dem zur Hinterachse führenden, nach der Düse DÜ1 liegenden Abschnitt der Hydraulikleitung 118 ist nahezu gleichgroß. Ist nun der Druckabfall bei einem bestimmten Volumenstrom nach der Düse DÜ2 größer als nach der Düse DÜ1, so wird der Stromregler 55a derart betätigt, daß ein größerer Fluidstrom zur Hinterachse und ein kleinerer Fluidstrom zur Vorderachse fließt. Im umgekehrten Falle, also wenn der Druck nach der Düse DÜ2 größer ist als der Druck nach der Düse DÜ1, wird der Steuerkolben des Stromreglers 55a derart betätigt, daß die der Vorderachse zugeordneten Hydraulikeinrichtung 3 mit einem größeren Fluidstrom versorgt wird als die der Hinterachse zugeordneten Hydraulikeinrichtung 3'. Der Druckabfall im Bereich der Düsen und damit das Aufteilungsverhältnis der Fluidströme ist über den Widerstand der einzelnen Düsen einstellbar. Stellt sich im Betrieb der Einrichtung 1' ein Druck in der Hydraulikleitung 13' ein, der größer ist als der in der Hydraulikleitung 13, so öffnet der Stromregler 55a und die Aufteilung der Fluidströme erfolgt nur noch in Abhängigkeit der Düsenquerschnitte und der Drücke der Vorder- und Hinterachse. In diesem Fall wird der Fluidstrom zur Vorderachse, also zur Hydraulikleitung 13, in Abweichung vom Regelvolumenstrom erhöht und das um so mehr der Hinterachsdruck, also der Druck in der Hydraulikleitung 13', den Vorderachsdruck übersteigt. Hierdurch wird eine verbesserte Dynamik an der Vorderachse bewirkt, die hilft, das System wieder in den Regelzustand zu versetzen.

Die rechte Stirnseite des Steuerkolbens 63 des Stromregler 55a kann, neben den über die Steuerleitung 126 aufgebrachten Druckkräften, zusätzlich von einer Federkraft beaufschlagt werden, die von einer gestrichelt angedeuteten Feder 65 aufgebracht wird. Die Feder 65 drückt in dem in Figur 5 dargestellten Ausführungsbeispiel der Einrichtung 1' den Steuerkolben 63 nach links in Richtung seiner Regelposition, wodurch der Steuerkolben 63 erst seine Regelposition verläßt und vollständig öffnet, wenn der Druck hinter Düse DÜ1 größer ist als der, der von der Feder 65 und dem von der Steuerleitung 126 herrschenden Druck auf die rechte Stirnseite aufgebracht wird. Die Feder 65 kann auch auf der gegenüberliegenden Stirnseite des Steuerkolbens 63 angeordnet sein, also auf der Seite, auf der die Steuerleitung 124 einen Druck an den Steuerkolben anlegt. Der Steuerkolben verläßt in diesem Fall seine Regelposition und öffnet vollständig den Fluidpfad zwischen der Hydrauklikleitung 118 und dem Leitungsabschnitt 122, wenn die Summe der auf die linke Stirnseite des Steuerkolbens wirkenden Kräfte, die sich aus Federkraft und dem hinter der Düse DÜ1 herrschenden Druck zusammensetzt, größer ist als die auf die rechte Stirnseite des Steuerkolbens wirkenden Druckkräfte, die hinter der Düse DÜ2 abgegriffen werden. Wenn der Steuerkolben seine Regelposition verlassen und den Fluidpfad zwischen der Hydraulikleitung 118 und der Hydraulikleitung 13' vollständig geöffnet hat, erfolgt die Aufteilung des von der Pumpe geförderten Fluidstroms nur noch in Abhängigkeit der Düsenquerschnitte und der an der Vorder- und Hinterachse wirkenden Drücke.

In einem weiteren Ausführungsbeispiel der Stromteilereinrichtung 53a kann ein auch als Druckpilot bezeichnetes Überdruckventil 69 vorgesehen sein, das über eine Steuerleitung 132, über die Steuerleitung 128, von der die Steuerleitung 126 abzweigt, und eine Düse DÜD, über die Düse DÜ2 und den Leitungsabschnitt 130 mit dem Druckauslaß 59 der Pumpe 11 verbunden ist. Das Überdruckventil 69 ist analog zu dem in Figur 2 dargestellten Überdruckventil ausgebildet und weist ebenfalls eine Kugel 75 auf, die durch eine Feder 77 gegen ein Ventilsitz 79 gepreßt wird. Sobald in der Steuerleitung 132 ein Überdruck herrscht, der auf die Kugel 75 eine Kraft ausübt, die größer ist als die durch die Feder 77 definierte Kraft, so hebt die Kugel 75 vom Ventilsitz 79 ab, so daß Hydraulikflüssigkeit zum Tank 15 abströmen kann. Ist nun infolge einer Störung die Hydraulikleitung 13 blockiert, beispielsweise durch ein Klemmen des Druckreglers 43, so daß kein Hydrauliköl abfließen kann, so fließt das Hydrauliköl über die Düse DÜ2, über die Düse DÜD, die Steuerleitungen 128 und 132 und über das Überdruckventil 69 in den Tank 15 ab. Auf die rechte Stirnseite des Steuerkolbens 63 wirkt demnach der Druck, der durch die Wirkung des Überdruckventils 69 begrenzt wird. Die Düsenquerschnitte der Düsen DÜ1 und DÜ2 sind gegenüber dem Querschnitt der Düse DÜD sehr groß, so daß die hydraulischen Widerstände vergleichsweise klein sind. Auf der gegenüberliegenden Stirnseite des Steuerkolbens wirkt der Druck, der hinter der Düse DÜ1 abgegriffen wird. Aufgrund des geringen Druckabfalls, der sich -im Vergleich zum größeren Druckabfall auf der anderen Seite des Steuerkolbens durch die Düsen DÜ2 und DÜD- nach der Düse DÜ1 einstellt, öffnet der Steuerkolben 63 die Verbindung vom Leitungsabschnitt 118 zum Leitungsabschnitt 122. Die Druckdifferenz ist vorzugsweise derart dimensioniert, daß der Steuerkolben in die geöffnete Position fährt, so daß nur eine kleine ölmenge als Steuerölmenge durch das Überdruckventil 69 in den Tank abfließt, während der Großteil des von der Pumpe 11 geförderten Volumenstroms über den Stromregler 55a zur Hydraulikeinrichtung 3' abfließen kann. Somit kann der Druckregler 43' die Funktion des Druckreglers 43 mitübernehmen.

In einer weiteren Ausführungsvariante der Stromteileinrichtung 53a kann eine, beispielsweise als mechanisches Rückschlagventil ausgebildete Ventileinheit 112 vorgesehen sein, die eine Verbindung zwischen der Hydraulikleitung 13 und der Hydraulikleitung 13' herstellt. Die Ventileinheit 112 verhindert, daß der Druck in der Hydraulikleitung 13' wesentlich größer werden kann als in der Hydraulikleitung 13 der Vorderachse. Die Ventileinheit 112 weist eine Kugel 116 auf, die in einem Ventilsitz 114 anliegt. Die Kugel 116 kann -wie gestrichelt angedeutet- von einer Feder in den Ventilsitz 114 gepreßt werden. Die Feder erhöht den zulässigen Druck in der Hydraulikleitung 13'. Die Feder hat insbesondere den Vorteil, daß beispielsweise bei einer Geradeausfahrt, bei der in den Hydraulikleitungen 13 und 13' ein minimaler und praktisch annähernd gleicher Druck herrscht, die Ventileinheit 112 nicht permanent anspricht und zu schwingen beginnt, das zu einem erhöhten Verschleiß der Ventileinheit führt. Die Feder ist vorzugsweise so ausgelegt, daß die Kugel erst ab einer definierten Druckdifferenz von dem Ventilsitz abgehoben wird.

Aus Figur 5 geht weiterhin eine Drossel D3 hervor, die im Sicherheitsventil 21 angeordnet ist und im inaktivierten Zustand des Sicherheitsventils eine Verbindung zwischen den beiden Druckkammern der Hydraulikeinrichtung 3 herstellt. Somit ist in dieser Schaltstellung des Sicherheitsventil ein gedämpftes Überströmen des Hydrauliköls von einer Druckkammer zur anderen möglich, was die Fahrstabilität im Falle einer Störung erhöht.

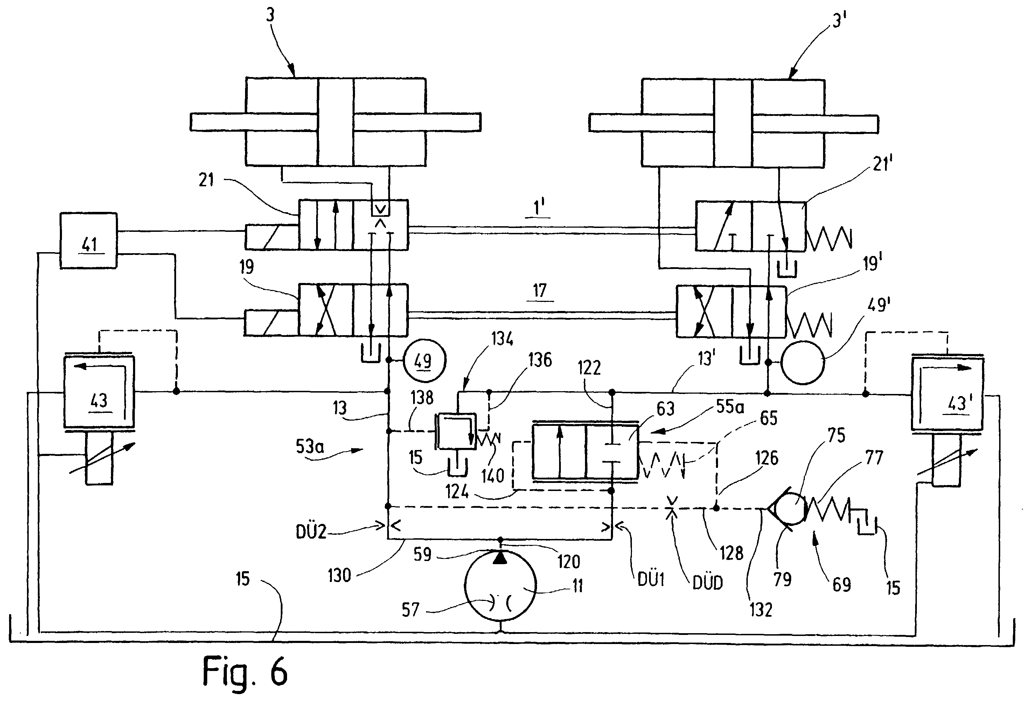

Figur 6 zeigt einen Hydraulikplan einer weiteren Ausführungsvariante der Einrichtung 1' zur Vermeidung der Rollneigung eines Fahrzeugs mit mindestens zwei jeweils wenigstens zwei Räder aufweisenden Achsen. Die in Figur 6 dargestellte Einrichtung 1' unterscheidet sich von der in Figur 5 abgebildeten dadurch, daß die Ventileinheit 112 durch einen Druckregler 134 ersetzt ist. Durch die Verwendung eines Druckreglers anstelle eines Rückschlagventils wird verhindert, daß der Druck in der Hydraulikleitung 13' größer werden kann als der Druck in der Hydraulikleitung 13. Der Druckregler ist als sogenannter Einkantenschieber ausgebildet, der also lediglich eine Steuerkante oder einen Sitz aufweist und der bei Betätigung, das heißt bei einer Verlagerung ein Abströmen des Hydrauliköls von der Hydraulikleitung 13' in den Tank 15 ermöglichen kann. Auf der rechten Seite des Druckreglers 134 beziehungsweise an dessen Schieber liegt der in der Hydraulikleitung 13' herrschende Druck, der über eine Steuerleitung 136 abgegriffen wird, an. Auf der anderen, der linken Seite des Druckreglers 134 liegt der über eine Steuerleitung 138 von der Hydraulikleitung 13 abgegriffene Druck an. Es kann -wie angedeutet- eine Feder 140 vorgesehen sein, die wahlweise auf beiden Seiten des Druckreglers 134 angeordnet sein kann. In dem in Figur 6 dargestellten Ausführungsbeispiel ist die Feder 140 auf der rechten Seite des Druckreglers 134 angeordnet. Hierdurch wird sichergestellt, daß der Druckregler 134 eine Fluidverbindung von der Hydraulikleitung 13' zum Tank 15 freigibt, sobald der Druck in der Hydraulikleitung 13 kleiner ist als die Summe der Kräfte, die von Feder 140 und dem in der Steuerleitung 136 anliegenden Druck aufgebracht werden. Auch hier gewährleistet die Feder, ähnlich der Feder 77 des Überdruckventils 69, daß der Druckregler 134 nicht ständig anspricht und die Fluidverbindung praktisch ununterbrochen öffnet und schließt, wie es beispielsweise bei einer Geradeausfahrt des Kraftfahrzeugs möglich sein kann. Ein Schwingen des Druckreglers 134 kann somit praktisch ausgeschlossen werden.

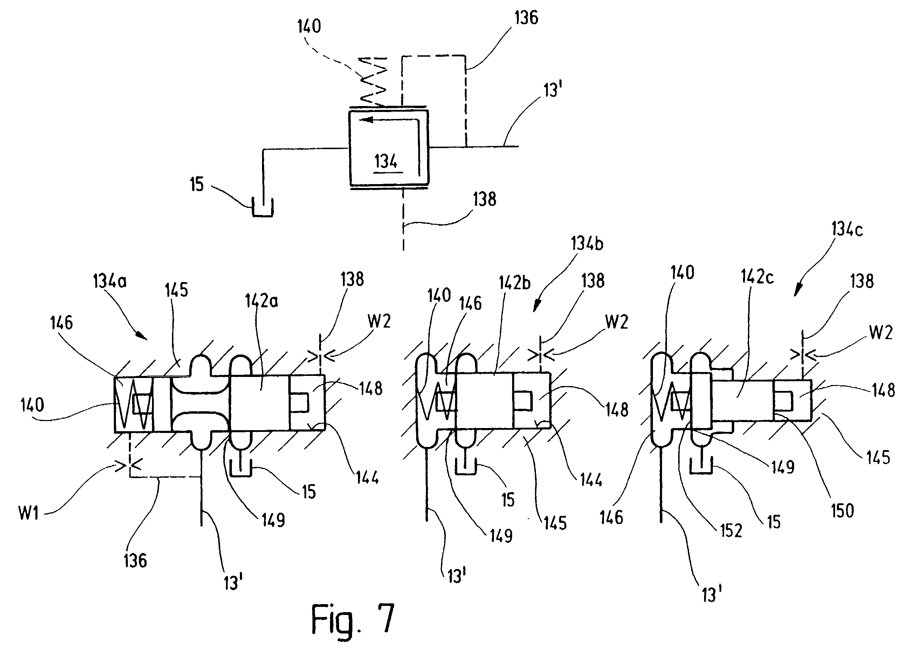

Figur 7 zeigt in der oberen Abbildung ein hydraulisches Symbol des zu Figur 6 beschriebenen Druckreglers 134. Es gibt eine Anzahl verschiedener Möglichkeiten den Druckregler 134 so auszugestalten, daß der Druckregler eine Verbindung von der Hydraulikleitung 13' zum Tank 15 freigibt, wenn der Druck in der Hydraulikleitung 13' einen größeren Wert erreicht als der Druck in der Hydraulikleitung 13. Ein Ausführungsbeispiel des Druckreglers 134 zeigt in Figur 7 die linke Abbildung. Der Druckregler 134a weist einen Steuerschieber 142a auf, der in einer Bohrung 144 beweglich gelagert ist. Ein erster Druckraum 146 wird zwischen einer Wandung 145 des Gehäuses des Druckreglers und der linken Stirnseite des Steuerschiebers 142a begrenzt, in den die Steuerleitung 136 mündet, die den Druck an der Hydraulikleitung 13' abgreift. Zwischen der rechten Stirnseite des Steuerschiebers und der Wandung 145 ist ein zweiter Druckraum 148 begrenzt, in dem der in der Hydraulikleitung 13' herrschende Druck über die Steuerleitung 138 angelegt ist. Weiterhin ist jeweils ein hydraulischer Widerstand W1 beziehungsweise W2, beispielsweise Düsen, in den Steuerleitungen 136 und 138 angeordnet, die der Dämpfung dienen. Die Hydraulikleitung 13' mündet in der Bohrung 144 in einem Bereich, in dem der Steuerschieber einen Einschnitt aufweist. In der hier gezeigten Stellung des Steuerschiebers 142a befindet sich der Steuerschieber in Regelposition. Sobald die Summe der im Betrieb der Pumpe auf die linke Stirnseite des Steuerschiebers wirkenden Kräfte, also die Druckkräfte und die von der Feder 140 aufgebrachte Federkraft, größer werden als die im zweiten Druckraum 148 auf die rechte Stirnseite des Steuerschiebers wirkenden Druckkräfte, so wird der Steuerschieber 142a nach rechts verlagert und gibt eine Fluidverbindung von der Hydraulikleitung 13' zum Tank 15 frei. Der Steuerschieber 142a ist mit einer Steuerfläche versehen, die von einer Steuerkante 149 begrenzt wird, die die zum Tank führende, in der Bohrung 144 angeordnete Ringnut von der Ringnut trennt, in der die Hydraulikleitung 13' mündet.

Die mittlere Abbildung in Figur 7 zeigt eine weitere Ausführungsvariante des Druckreglers 134. Der Druckregler 134b weist einen Steuerschieber 142b auf, der -im Gegensatz zu dem Steuerschieber 142a-keinen Einschnitt aufweist. Die Hydraulikleitung 13' mündet hier unmittelbar in den ersten Druckraum 146, der durch den Steuerschieber 142b beziehungsweise durch die Steuerkante 149 gegenüber dem Tank 15 abgetrennt ist. Der zweite Druckraum 148 ist über den hydraulischen Widerstand W2 und über die Steuerleitung 138 mit der Hydraulikleitung 13 verbunden. Auch in diesem Ausführungsbeispiel gibt der Steuerschieber eine Fluidverbindung von der Hydraulikleitung 13' zum Tank 15 frei, wenn die auf die rechte Stirnseite des Steuerschiebers wirkenden Kräfte kleiner sind als die auf dessen linke Stirnseite wirkenden Kräfte, die sich aus der Kraft der Feder 140 und den Kräften des in der Hydraulikleitung 13' herrschenden Drucks zusammensetzen.

In der rechten Abbildung der Figur 7 ist ein weiterer Druckregler 134c dargestellt, der einen Steuerschieber 142c aufweist, dessen Stirnseiten unterschiedlich große Flächen aufweisen, an denen der jeweilige an den Druckräumen 146 und 148 angelegte Druck wirkt. Die dem zweiten Druckraum 148 zugewandte Stirnseite 150 des Steuerschiebers weist eine kleinere Querschnittsfläche auf, an der die Druckkräfte angreifen können als die dem ersten Druckraum 146 zugewandte Stirnseite 152. Vorzugsweise ist der Druckregler 142c so ausgestaltet, daß er eine Fluidverbindung von dem ersten Druckraum zum Tank freigibt, wenn der Druck in der Hydraulikleitung 13' größer ist als ein Faktor < 1 multipliziert mit dem in der Hydraulikleitung 13 herrschenden Druck minus dem der Federkraft entsprechenden Drucks. Es wird deutlich, daß durch die Flächenunterschiede an den Stirnseiten des Steuerschiebers, dieser auch bei gleichen Drücken innerhalb der Hydraulikleitungen 13 und 13' sich in Richtung der das niedrigere Kräfteniveau aufweisende Seite verlagert. Bei einem Flächenverhältnis von 1:1 stellt die Feder 140 ein Kräfteungleichgewicht, ein sogenanntes Offset, her.

Durch diese Ventilanordnung ist es möglich, den Druck an der Hydraulikeinrichtung 3' der Hinterachse und damit die Torsionsmomente an den dazugehörigen Stabilisatorabschnitten als feste Funktion in Abhängigkeit des Drucks an der Hydraulikeinrichtung 3 der Vorderachse und damit dessen Torsionsmomente mit nur einem elektrisch angesteuertem Ventil (Druckregler 43) einzustellen. Hierdurch ist es möglich, die hydraulisch wirksamen Flächen an beiden Schwenkmotoren gleich groß auszubilden und trotzdem an der Hinterachse einen geringen Druck einzustellen und damit geringere Torsionsmomente.

Weiterhin steht der Vorder- und Hinterachse ein über die Stromteilereinrichtung 53, 53a genau definierbarer Volumenstrom zur Verfügung, der unabhängig vom Betriebsdruck der Pumpe ist. Dieser zur Verfügung stehende Volumenstrom bestimmt die Dynamik der beiden Hydraulikkreise und sorgt durch seine Konstanz für ein stabiles Regelverhalten.

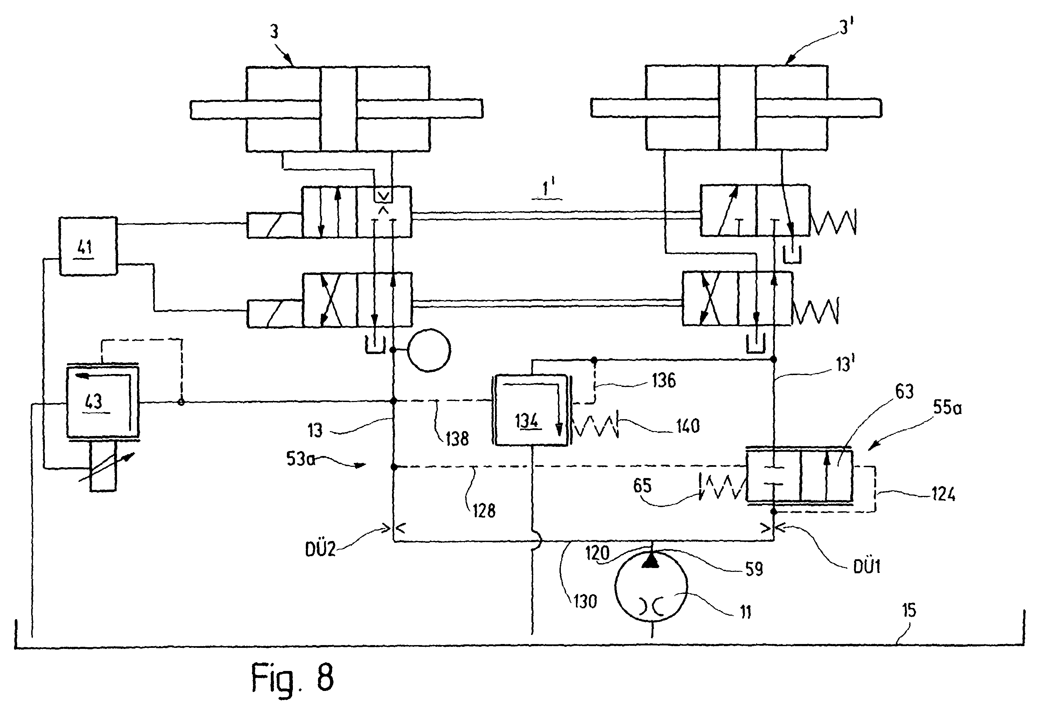

Figur 8 zeigt einen Hydraulikplan einer weiteren Ausführungsvariante der Einrichtung 1' zur Verminderung der Rollneigung eines Fahrzeugs mit mindestens zwei wenigstens je zwei Räder aufweisenden Achse. Teile, die mit denen in den bisher beschriebenen Figuren übereinstimmen, sind mit gleichen Bezugszeichen versehen, so daß insofern zu deren Beschreibung zu den bereits beschriebenen Figuren verwiesen wird. Die Stromteilereinrichtung 53a weist gegenüber der in Figur 6 dargestellten Stromteilereinrichtung den Unterschied auf, daß hier der Druckregler 43', der den Druck in der Hydraulikleitung 13' auf einen definierten Wert begrenzt, sowie der Drucksensor 49' nicht benötigt werden. Hierzu ist der Druckregler 134 über die Steuerleitung 138 unmittelbar mit der Hydraulikleitung 13 verbunden. Auf der gegenüberliegenden Seite des Druckreglers 134 liegt über die Steuerleitung 136 der in der Hydraulikleitung 13' herrschende Druck an, der gegebenenfalls von der Kraft einer Feder unterstützt wird. Der Druckregler kann wie einer der zu Figur 7 beschriebenen Druckregler a, b oder c ausgebildet sein. Der Steuerkolben 63 des Stromreglers 55a wird mit einem Druck beaufschlagt, der hinter der Düse DÜ1 abgegriffen wird. Der Druck in der Steuerleitung 124 wirkt in Richtung der OffenStellung. Auf der anderen Seite des Steuerkolbens wirkt ein Druck, der über die Steuerleitung 128 an der Hydraulikleitung 13 abgegriffen wird. Diese auf den Steuerkolben 63 wirkenden Druckkräfte können von der hier angedeuteten Feder 65 verstärkt werden.

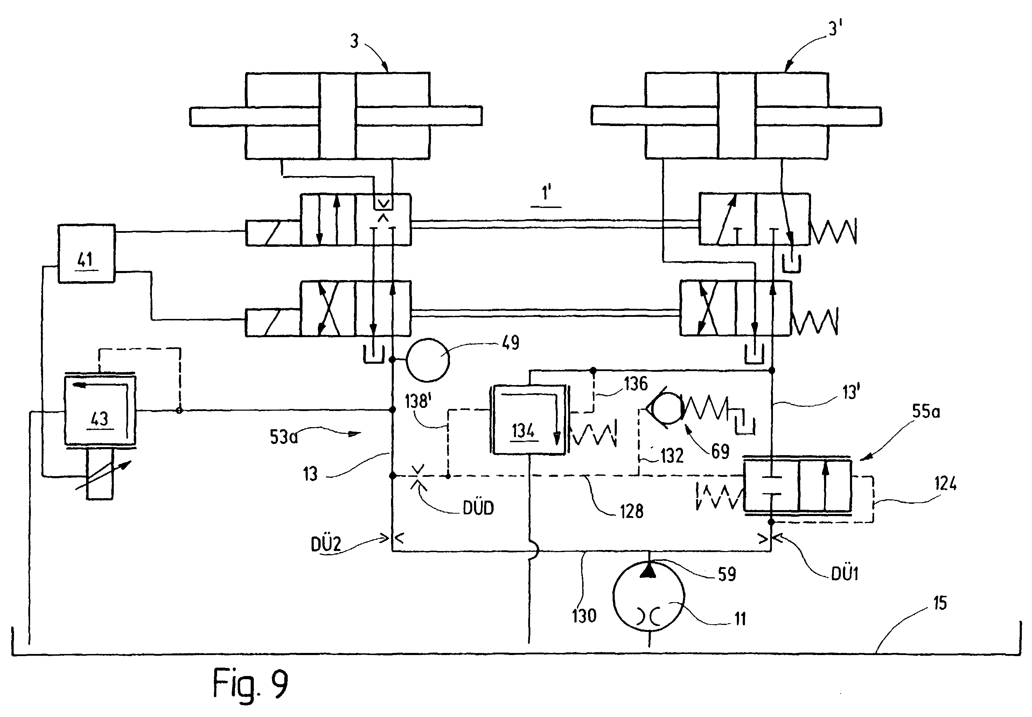

Figur 9 zeigt einen Hydraulikplan einer weiteren Ausführungsvariante der Einrichtung 1', die sich von der in Figur 8 dargestellten Einrichtung dadurch unterscheidet, daß die Stromteilereinrichtung 53a noch zusätzlich das Überdruckventil 69 aufweist, das über die Steuerleitung 132 und über die Düse DÜD den in der Hydraulikleitung 13 herrschenden Druck abgreift. Weiterhin liegt an dem Druckregler 134 ein Druck an, der über eine Steuerleitung 138' -in Strömungsrichtung des Hydrauliköls betrachtet- hinter der Düse DÜD abgegriffen wird. Im folgenden wird die Funktion der Stromteilereinrichtung gemäß Figur 9 näher erläutert:

Steigt aufgrund einer Fehlfunktion der Druck in der Hydraulikleitung 13 an, beispielsweise bei einem Defekt des Druckreglers 43, so fährt der Steuerkolben 63 des Stromreglers in die geöffnete Position, wobei der Druck in der Hydraulikleitung 13' über den Druckregler 134 abgeregelt wird. Der Druck in der Hydraulikleitung 13' stellt sich dann entsprechend der Ausgestaltung des Druckreglers 134 (vergleiche dessen in Figur 7 beschriebenen Ausführungsvarianten) in einem bestimmten Verhältnis ein, beispielsweise mit Offset, das heißt, mit einem durch die Federkraft hervorgerufenen Ungleichgewicht der Drücke in den Hydraulikleitungen beziehungsweise Steuerleitungen 138' und 136, wobei der Druck in der Leitung 138' durch die Wirkung des Überdruckventils 69 begrenzt wird.

Die erfindungsgemäßen Stromteilereinrichtungen 53 und 53a stellen aus Gründen der Fahrstabilität vorzugsweise der Vorderachse einen größeren Druck zur Verfügung als der Hinterachse. Durch diese Bedingung kann in vorteilhafter Weise ein Stromregler 55a verwendet werden, der lediglich eine Steuerkante aufweist, die in Überdeckung fährt und einen Fluidpfad verschließt oder freigibt. Ein derartiger Stromregler 55a ist schwingungsunempfindlicher als ein klassischer Stromteiler, der zwei Steuerkanten aufweist, insbesondere dann, wenn der Druck an der Vorder- und Hinterachse annährend gleichgroß ist. Anstelle des in den Figuren beschriebenen Einkanten-Stromreglers kann auch ein klassischer Stromteiler mit zwei Steuerkanten eingesetzt werden, bei dem durch Endanschläge sichergestellt ist, daß ausschließlich eine, die der Hinterachse zugeordnete Steuerkante in Überdeckung fahren kann und daß die andere Steuerkante, der der Vorderachse zugeordnet ist, nicht vollständig schließen kann. Durch diese Maßnahme ist die Schwingungsempfindlichkeit des Zweikanten-Stromteilers herabgesetzt.

Die Stromregler 55 und 55a unterscheiden sich dadurch, daß der Stromregler 55 einen konstanten Volumenstrom zur Vorderachse zur Verfügung stellt und nur der Rest des von der Pumpe geförderten Hydrauliköls zur Hinterachse gelangt, wobei die beiden Volumenströme gleich sein können, wenn die Pumpe einen konstanten Volumenstrom anliefert, während beim Stromregler 55a das Aufteilungsverhältnis konstant bleibt. Durch den Stromregler 55a ist realisiert, daß der von der Pumpe angelieferte Volumenstrom immer mit dem gleichen Verhältnis aufgeteilt wird, so daß das Hydrauliköl konstant gleichmäßig, innerhalb des vorgegebenen Teilungsverhältnisses, an die Vorder- und Hinterachse beziehungsweise Hydraulikeinrichtungen 3 und 3' geliefert wird.

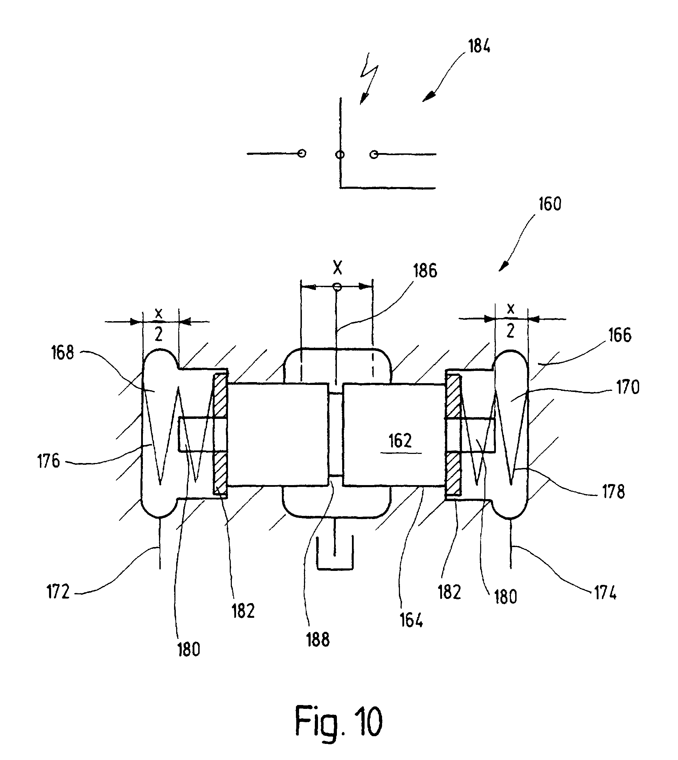

Figur 10 zeigt ein Prinzipschaltbild einer Sensoreinrichtung 160, die einen Schieber 162 aufweist, der in einer Bohrung 164 geführt ist. Zwischen einer Wandung 166 und der linken Stirnseite des Schiebers 162 ist eine erste Kammer 168 begrenzt und zwischen der rechten Stirnseite des Schiebers und der Wandung eine zweite Kammer 170. Die erste Kammer 168 steht über einen Leitungsabschnitt 172 beispielsweise mit dem fünften Leitungsabschnitt 35 (vergleiche Figur 2) und die Kammer 170 über einen Leitungsabschnitt 174 mit dem zweiten Leitungsabschnitt 25 (siehe Figur 2) in Verbindung. Die Sensoreinrichtung 160 kann an beliebiger Stelle innerhalb der Einrichtung 1 oder 1' angeordnet sein, an der eine Druckdifferenz bestimmt werden soll. Der Schieber 162 wird von zwei Federn 176 und 178 an seinen Stirnseiten mit einer Kraft beaufschlagt, die den Schieber in einer Mittelstellung -wie in Figur 10 abgebildet- hält. Der Schieber 162 weist an seinen stirnseitigen Endbereichen jeweils einen Zapfen 180 auf, auf denen jeweils eine auf den Zapfen beweglich geführte Dichtscheibe 182 angeordnet ist. Die Dichtscheiben 182 definieren die Mittellage des Schiebers 162. Die maximale Wegstrecke, die der Schieber 162 zurücklegen kann, ist mit einem X gekennzeichnet und wird durch die Länge der Zapfen definiert. Die linke und die rechte Endlage des Schiebers 162 ist durch die Zapfen 180 beziehungsweise durch deren jeweilige Länge bestimmt, die der Wegbegrenzung dienen. In den Endlagen des Schiebers stößt einer der Zapfen an der Wandung 166 des Gehäuses an. Die Wandung 166 dient also als Anschlag.

Der vorzugsweise in einer stabilen Mittelstellung befindliche Schieber kann -bei dem in Figur 10 abgebildeten Ausführungsbeispiel- demnach nach links und rechts um eine Wegstrecke X/2 verlagert werden. Aufgrund der Wirkung der Feder 176 und 178 verläßt der Schieber 162 die Mittellage erst dann, wenn der in einer der Kammern anliegende Druck um einen bestimmten Betrag größer ist als der Druck, der in der anderen Kammer herrscht. Das bedeutet, daß wenn der Druck beispielsweise in der ersten Kammer 168 größer ist als der Druck in der zweiten Kammer 170, wird der Schieber 162 nach rechts verschoben und umgekehrt. Diese Verlagerung wird beispielsweise mittels eines Drahtes 186, der in eine im Schieber 162 angeordnete Ringnut 188 eingreift und ausgelenkt wird, erfaßt und mittels einer hier nur angedeuteten elektrischen oder elektronischen Erfassungseinrichtung 184 in ein elektrisches Signal umgewandelt, das beispielsweise an die Steuereinrichtung 41 der Einrichtung 1 beziehungsweise 1' weitergeleitet wird. Die Sensoreinrichtung 160 ist allgemein einsetzbar, um zwei Drücke miteinander zu vergleichen. Die Sensoreinrichtung kann beispielsweise die Wirkung für das Sicherheitsventil und/oder das Umschaltventil prüfen. Da die Umschalt und Sicherheitsventile innerhalb eines Gehäuses angeordnet sind und von außen die Stellung von deren Steuerkolben nicht visuell erkennbar ist, kann die Sensoreinrichtung dies -wie beschrieben- in einfacher Weise feststellen und gegebenenfalls direkt anzeigen. Die Positionen des Schiebers 162 können beispielsweise den einzelnen Fahrtrichtungen des Kraftfahrzeugs zugeordnet sein. So ist es denkbar, daß die Mittelstellung der Geradeausfahrt, die bei einer Verlagerung des Schiebers nach rechts eingenommene Position einer Rechtskurvenfahrt und die nach einer Verlagerung des Schiebers nach links eingenommene Position einer Linkskurvenfahrt zugeordnet ist.

In einer anderen Ausführungsform der Sensoreinrichtung 160 können anstelle des Schiebers 162 zwei Druckschalter vorgesehen werden, die ein Signal, beispielsweise an die Steuereinrichtung 41, weiterleiten, sobald ein vorzugsweise einstellbarer Schwelldruck in einer der Leitungen 172 und 174 erreicht wird. Die Druckschalter können jeweils mit einer Hydraulikleitung oder einer Steuerleitung verbunden sein. Denkbar ist es auch, die Druckschalter direkt innerhalb einer Leitung, einer Kammer oder einem Druckraum anzuordnen, in der/dem sich unter Druck stehendes Hydrauliköl befindet.

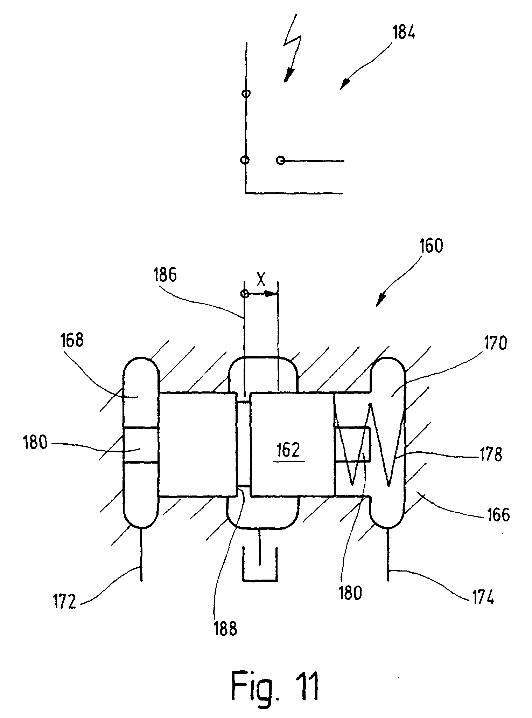

Figur 11 zeigt ein Prinzipschaltbild einer weiteren Ausführungsform der Sensoreinrichtung 160, die sich von der in Figur 10 abgebildeten Sensoreinrichtung dadurch unterscheidet, daß die Dichtscheiben 182 sowie die Feder 176 entfallen. Hierdurch kann der Schieber 162 -wie in Figur 11 dargestellt- eine Vorzugsstellung einnehmen; das bedeutet, er befindet sich in seiner linken Endlage, in der der Zapfen 180 an der Wandung 166 anliegt. Diese Vorzugsstellung beziehungsweise Endlage nimmt der Schieber 162 sowohl im drucklosen Zustand ein als auch dann, wenn in der ersten Kammer 168 ein Druck herrscht, der kleiner als die Summe der in der zweiten Kammer 170 anliegenden Druckkräfte und der durch die Feder 178 erzeugten Druckkraft ist. Alternativ ist es auch möglich, daß die Feder 178 entfällt und die Feder 176 vorgesehen ist, so daß der Schieber 162 in seiner rechten Endlage seine Vorzugsstellung aufweist.

## Patentansprüche

1. Einrichtung (1) zur Verminderung der Rollneigung eines Fahrzeugs mit mindestens einer wenigstens zwei Räder aufweisenden Achse, die mit einem Querstabilisator versehen ist, der zwei mit Hilfe einer von einer elektronischen Steuereinrichtung (41) angesteuerten Hydraulikeinrichtung (3) gegeneinander verdrehbare Stabilisatorabschnitte umfaßt, mit mindestens einer die Hydraulikeinrichtung (3) versorgenden Pumpe (11) und mit einer unabhängig voneinander betätigbare Umschalt- und Sicherheitsventile (19;21) aufweisenden Ventileinrichtung (17), die mit der Hydraulikeinrichtung (3) zusammenwirkt und die Verdrehrichtung und Kopplung der Stabilisatorabschnitte beeinflusst, **dadurch gekennzeichnet, daß** die Ventileinrichtung (17) ausschließlich ein Umschaltventil (19) und ausschließlich ein Sicherheitsventil (21) umfaßt.

2. Einrichtung nach Anspruch 1, **dadurch gekennzeichnet, daß** das Umschaltventil (19) als 4/2-Wegeventil ausgebildet ist.

3. Einrichtung nach Anspruch 1 oder 2, **dadurch gekennzeichnet, daß** das Sicherheitsventil (21) in einer ersten Funktionsstellung die Hydraulikeinrichtung (3) mit der Pumpe (11) verbindet und in einer zweiten Funktionsstellung eine starre oder eine gedämpfte Kopplung der Stabilisatorabschnitte oder eine Entkopplung der Stabilisatorabschnitte bewirkt.

4. Einrichtung nach einem der vorhergehenden Ansprüche, **dadurch gekennzeichnet, daß** das Sicherheitsventil (21) das letzte Funktionsglied der hydraulischen Versorgung der Hydraulikeinrichtung (3) ist.

5. Einrichtung nach einem der vorhergehenden Ansprüche, **dadurch gekennzeichnet, daß** das Umschaltventil (19) und/oder das Sicherheitsventil (21) elektromagnetisch betätigbar ist.

6. Einrichtung nach einem der vorhergehenden Ansprüche, **dadurch gekennzeichnet, daß** das Umschaltventil (19) und/oder das Sicherheitsventil (21) eine Vorzugsstellung aufweist.

7. Einrichtung (1) zur Verminderung der Rollneigung eines Fahrzeugs mit mindestens zwei wenigstens je zwei Räder aufweisenden Achsen, die jeweils mit einem Querstabilisator versehen sind, der zwei mit Hilfe einer von einer elektronischen Steuereinrichtung (41) angesteuerten Hydraulikeinrichtung (3;3') gegeneinander verdrehbare Stabilisatorabschnitte umfaßt, mit mindestens einer die Hydraulikeinrichtungen (3;3') versorgenden Pumpe (11) und mit einer unabhängig voneinander betätigbare Umschalt- und Sicherheitsventile aufweisenden Ventileinrichtung (17), die mit den Hydraulikeinrichtungen (3;3') zusammenwirkt und die Verdrehrichtung und Kopplung der Stabilisatorabschnitte beeinflußt, **dadurch gekennzeichnet, daß** die Ventileinrichtung (17) jeweils ein Umschaltventil (19;19') und ein unabhängig davon betätigbares Sicherheitsventil (21;21') für jede Hydraulikeinrichtung (3;3') umfaßt und daß die Umschaltventile (19;19') und/oder die Sicherheitsventile (21;21') starr miteinander gekoppelt sind.

8. Einrichtung nach Anspruch 7, **dadurch gekennzeichnet, daß** das Umschaltventil (19,19') als 4/2-Wegeventil ausgebildet ist.

9. Einrichtung nach Anspruch 7 oder 8, **dadurch gekennzeichnet, daß** das Sicherheitsventil (21,21') in einer ersten Funktionsstellung die Hydraulikeinrichtung (3,3') mit der Pumpe (11) verbindet und in einer zweiten Funktionsstellung eine starre oder eine gedämpfte Kopplung der Stabilisatorabschnitte oder eine Entkopplung der Stabilisatorabschnitte bewirkt.

10. Einrichtung nach einem der Ansprüche 7 bis 9, **dadurch gekennzeichnet, daß** das Sicherheitsventil (21,21') das letzte Funktionsglied der hydraulischen Versorgung und der Hydraulikeinrichtung (3, 3') ist.

11. Einrichtung nach einem der Ansprüche 7 bis 10, **dadurch gekennzeichnet, daß** das Umschaltventil (19,19') und/oder das Sicherheitsventil (21,21') elektromagnetisch betätigbar ist.

12. Einrichtung nach einem der Ansprüche 7 bis 11, **dadurch gekennzeichnet, daß** das Umschaltventil (19,19') und/oder das Sicherheitsventil (21,21') eine Vorzugsstellung aufweist.

13. Einrichtung nach einem der Ansprüche 7 bis 12, **gekennzeichnet durch** eine die den Hydraulikeinrichtungen (3,3') bereitgestellten Druckniveaus verbindende Hydraulikleitung (110), mit einer Ventileinheit (112), die eine Hydraulikverbindung freigibt, wenn der an der einen, vorzugsweise der vorderen Achse zugeordneten Hydraulikeinrichtung (3) anliegende Druck kleiner ist als der an der Hydraulikeinrichtung (3') anliegende Druck.

14. Einrichtung nach einem der vorhergehenden Ansprüche, und mit einer den von der Pumpe zu den Achsen zugeordneten Hydraulikeinrichtungen gelieferten Hydraulikstrom beeinflussenden Stromteilereinrichtung, **dadurch gekennzeichnet, daß** die Pumpe (11) als volumenstrombegrenzte Pumpe ausgebildet ist.

15. Einrichtung nach einem der vorhergehenden Ansprüche, **dadurch gekennzeichnet, daß** die Stromteilereinrichtung (53) einen Stromregler (55) umfaßt, der in einer ersten Funktionsstellung die erste -vorzugsweise der vorderen Achse zugeordnete- Hydraulikeinrichtung (3) und in der zweiten Funktionsstellung die zweite -vorzugsweise der hinteren Achse zugeordnete- Hydraulikeinrichtung (3') mit der Pumpe (11) verbindet und die erste Hydraulikeinrichtung (3) vorzugsweise mit einem nahezu konstanten Ölstrom versorgt.

16. Einrichtung nach einem der vorhergehenden Ansprüche, **dadurch gekennzeichnet, daß** die Stromteilereinrichtung (53a) einen Stromregler (55a) umfaßt, der in einer ersten Funktionsstellung die erste -vorzugsweise der vorderen Achse zugeordnete-Hydraulikeinrichtung (3) und in der zweiten Funktionsstellung die zweite -vorzugsweise der hinteren Achse zugeordnete- Hydraulikeinrichtung (3') mit der Pumpe (11) verbindet und die Hydraulikeinrichtungen (3,3') jeweils mit einem Ölstrom versorgt, wobei das Verhältnis der Ölströme nahezu konstant ist.

17. Einrichtung nach einem der vorhergehenden Ansprüche, **dadurch gekennzeichnet, daß** in dem der ersten Hydraulikeinrichtung (3) zugeordneten Strompfad ein erster Druckregler (43) und in dem der zweiten Hydraulikeinrichtung (3') zugeordneten Strompfad ein zweiter Druckregler (43') vorgesehen ist, und daß die Druckregler miteinander gekoppelt sind.

18. Einrichtung nach einem der vorhergehenden Ansprüche, **gekennzeichnet durch** eine die den Hydraulikeinrichtungen (3,3') bereitgestellten Druckniveaus verbindende Hydraulikleitung (110), mit einer Ventileinheit (112), die eine Hydraulikverbindung freigibt, wenn der an der einen, vorzugsweise der vorderen Achse zugeordneten Hydraulikeinrichtung (3) anliegende Druck kleiner ist als der an der Hydraulikeinrichtung (3') anliegende Druck.

19. Einrichtung nach einem der vorhergehenden Ansprüche, **dadurch gekennzeichnet, daß** die Ventileinheit (112) eine Feder umfaßt, die eine Kugel (116) in einen Ventilsitz (114) preßt.

20. Einrichtung nach einem der vorhergehenden Ansprüche, **dadurch gekennzeichnet, daß** den Hydraulikleitungen (13;13') Drosseleinrichtungen (DÜ2,DÜ1) zugeordnet sind.

21. Einrichtung nach einem der vorhergehenden Ansprüche, **dadurch gekennzeichnet, daß** das Aufteilungsverhältnis in Abhängigkeit der Querschnittsfläche der Drosseleinrichtungen (DÜ1,DÜ2) einstellbar ist.

22. Einrichtung nach spruch 20 oder 21, **dadurch gekennzeichnet, daß** die Drosseleinrichtungen (DÜ1,DÜ2) so ausgebildet sind, daß der der Vorderachse zugeführte Fluidstrom größer ist als der der Hinterachse zugeführte Fluidstrom.

23. Einrichtung nach Anspruch 16, **dadurch gekennzeichnet, daß** der Stromregler (55a) als einseitig regelnder Stromteiler mit nur einer Steuerkante ausgebildet ist.

24. Einrichtung einem oder mehreren der vorhergehenden Ansprüche, **dadurch gekennzeichnet, daß** der erste Druckregler (43) und der zweite Druckregler (43') über den mit einem als Überdruckventil (69) wirkenden, vorzugsweise mechanisch ausgebildeten Druckpiloten versehenen Stromregler (55,55a) gekoppelt sind.

25. Einrichtung nach einem der vorhergehenden Ansprüche, **gekennzeichnet durch** einen Druckregler (134), der einerseits mit der Hydraulikleitung (13) und andererseits mit der Hydraulikleitung (13') verbunden ist und der einen Steuerschieber (142a,142b,142c) aufweist, wobei die druckbeaufschlagten Flächen des Steuerschiebers (142c) vorzugsweise verschieden groß sind.

26. Einrichtung nach Anspruch 25, **dadurch gekennzeichnet, daß** der Druckregler (134) so zwischen der Hydraulikleitung (13') der Hinterachse und dem Tank (15) angeordnet ist, daß er die Funktion des Druckreglers (43') übernimmt.

27. Einrichtung nach einem der vorhergehenden Ansprüche, **dadurch gekennzeichnet, daß** eine Stellungserfassungseinrichtung (Erfassungseinrichtung (90), Sensoreinrichtung (160)) vorgesehen ist, die die Stellung mindestens eines Steuerkolbens der Umschaltventile (19,19') und/oder der Sicherheitsventile (21,21') und/oder eines Schiebers (162) erfaßt.

28. Einrichtung nach einem der vorhergehenden Ansprüche, **dadurch gekennzeichnet, daß** wenigstens zwei Druckschalter vorgesehen sind, die in verschiedenen Hydraulikleitungen oder Steuerleitungen angeordnet sind.

## Claims

1. Device (1) for reducing the roll tendency of a vehicle having at least one axle which has at least two wheels and is provided with a stabilizer bar which comprises two stabilizer sections which can rotate with respect to each other with the aid of a hydraulic device (3) activated by an electronic control device (41), the device also having at least one pump (11) which supplies the hydraulic device (3) and having a valve device (17) which has switch over and safety valves (19; 21), which can be activated independently of one another, and which interacts with the hydraulic device (3) and influences the direction of rotation and the coupling of the stabilizer sections, **characterized in that** the valve device (17) exclusively comprises a switchover valve (19) and exclusively comprises a safety valve (21).

2. Device according Claim 1, **characterized in that** the switchover valve (19) is designed as a 4/2-port directional control valve.

3. Device according to Claim 1 or, 2, **characterized in that** the safety valve (21) connects the hydraulic device (3) to the pump (11) in a first functional position and in a second functional position brings about a rigid or a damped coupling of the stabilizer sections for a decoupling of the stabilizer sections.

4. Device according to one of the preceding claims, **characterized in that** the safety valve (21) is the last functional element of the hydraulic supply of the hydraulic device (3).

5. Device according to one of the preceding claims, **characterized in that** the switchover valve (19) and/or the safety valve (21) can be actuated electromagnetically.

6. Device according to one of the preceding claims, **characterized in that** the switchover valve (19) and/or the safety valve (21) has a preferred position.

7. Device (1) for reducing the roll tendency of a vehicle having at least two axles which have at least two wheels each and are each provided with a stabilizer bar which comprises two stabilizer sections which can rotate with respect to each other with the aid of a hydraulic device (3;3') activated by an electronic control device (41), the device also having at least one pump (11) which supplies the hydraulic devices (3; 3') and having a valve device (17) which has switchover and safety valves, which can be actuated independently of one another, and which interacts with the hydraulic devices (3; 3') and influences the direction of rotation and the coupling of the stabilizer sections, **characterized in that** the valve device (17) in each case comprises a switchover valve (19; 19') and a safety valve (21; 21') which can be actuated independently of the said switchover valve, for each hydraulic device (3; 3'), and **in that** the switchover valves (19; 19') and/or the safety valves (21; 21') are coupled rigidly to one another.

8. Device according to Claim 7, **characterized in that** the switchover valve (19, 19') is designed as a 4/2-port directional control valve.

9. Device according to Claim 7 or 8, **characterized in that** the safety valve (21, 21') connects the hydraulic device (3, 3') to the pump (11) in a first functional position and in a second functional position brings about a rigid or damped coupling of the stabilizer sections or a decoupling of the stabilizer sections.

10. Device according to one of Claims 7 to 9, **characterized in that** the safety valve (21, 21') is the last functional element of the hydraulic supply and of the hydraulic device (3, 3').

11. Device according to one of Claims 7 to 10, **characterized in that** the switchover valve (19, 19') and/or the safety valve (21, 21') can be actuated electromagnetically.

12. Device according to one of Claims 7 to 11, **characterized in that** the switchover valve (19, 19') and/or the safety valve (21, 21') has a preferred position.

13. Device according to one of Claims 7 to 12, **characterized by** a hydraulic line (110) connecting the pressure levels provided by the hydraulic devices (3, 3') to a valve unit (112) which releases a hydraulic connection when the pressure present at the one hydraulic device (3), which is preferably assigned to the front axle, is smaller than the pressure present at the hydraulic device (3').

14. Device according to one of the preceding claims, and having a flow-dividing device which influences the hydraulic flow supplied by the pump to the hydraulic devices assigned to the axles, **characterized in that** the pump (11) is designed as a pump with a restricted volumetric flow.

15. Device according to one of the preceding claims, **characterized in that** the flow-dividing device (53) comprises a flow regulator (55) which, in a first functional position, connects the first hydraulic device (3) that which is preferably assigned to the front axle - to the pump (11) and, in the second functional position, connects the second hydraulic device (3') - which is preferably assigned to the rear axle - to the said pump (11), and which supplies the first hydraulic device (3) preferably with a virtually constant oil flow.

16. Device according to one of the preceding claims, **characterized in that** the flow-dividing device (53a) comprises a flow regulator (55a) which, in a first functional position, connects the first hydraulic device (3), which is preferably assigned to the front axle - to the pump (11) and, in the second functional position, connects the second hydraulic device (3') - which is preferably assigned to the rear axle - to the said pump (11), and supplies the hydraulic devices (3, 3') each with an oil flow, in which case the ratio of the oil flows is virtually constant.

17. Device according to one of the preceding claims, **characterized in that** a first pressure regulator (43) is provided in the flow path assigned to the first hydraulic device (3) and a second pressure regulator (43') is provided in the flow path assigned to the second hydraulic device (3'), and **in that** the pressure regulators are coupled to each other.

18. Device according to one of the preceding claims, **characterized by** a hydraulic line (110) connecting the pressure levels provided by the hydraulic devices (3, 3') to a valve unit (112) which releases a hydraulic connection when the pressure present at the one hydraulic device (3), which is preferably assigned to the front axle, is smaller than the pressure present at the hydraulic device (3').

19. Device according to one of the preceding claims, **characterized in that** the valve unit (112) comprises a spring which presses a ball (116) into a valve seat (114).

20. Device according to one of the preceding claims, **characterized in that** throttling devices (DÜ2, DÜ1) are assigned to the hydraulic lines (13; 13').

21. Device according to one of the preceding claims, **characterized in that** the proportioning ratio can be set as a function of the cross-sectional surface of the throttling devices (DÜ1, DÜ2).

22. Device according to Claim 20 or 21, **characterized in that** the throttling devices (DÜ1, DÜ2) are designed in such a manner that the fluid flow supplied to the front axle is greater than the fluid flow supplied to the rear axle.

23. Device according to Claim 16, **characterized in that** the flow regulator (55a) is designed as flow divider which regulates on one side and has just one control ramp.

24. Device according to one or more of the preceding claims, **characterized in that** the first pressure regulator (43) and the second pressure regulator (43') are coupled via the flow regulator (55, 55a) which is provided with a pressure pilot which acts as a pressure control valve (69) and is preferably of mechanical design.

25. Device according to one of the preceding claims, **characterized by** a pressure regulator (134) which is connected on one side to the hydraulic line (13) and on the other side to the hydraulic line (13') and which has a control slide valve (142a, 142b, 142c), in which case those surfaces of the control slide valve (142c) which are subjected to pressure are preferably of different sizes.

26. Device according to Claim 25, **characterized in that** the pressure regulator (134) is arranged between the hydraulic line (13') of the rear axle and the tank (15) in such a manner that it takes on the function of the pressure regulator (43').

27. Dévice according to one of the preceding claims, **characterized in that** a position-detecting device (detecting device (90), sensor device (160)) is provided which detects the position of at least one control piston of the switchover valves (19, 19') and/or of the safety valves (21, 21') and/or of a slide valve (162).

28. Device according to one of the preceding claims, **characterized in that** at least two pressure switches are provided which are arranged in different hydraulic lines or control lines.

## Revendications

1. Installation (1) pour réduire la tendance au roulis d'un véhicule comprenant au moins un essieu avec au moins deux roues, cet essieu étant équipé d'un stabilisateur transversal, comprenant deux segments de stabilisateurs pouvant être tournés l'un par rapport à l'autre par une installation hydraulique (3) commandée à l'aide d'une installation de commande électronique (41),
- au moins une pompe (11) assurant l'alimentation de l'installation hydraulique (3), et
- une installation à vannes (17) ayant des vannes de commutation et de sécurité (19 ; 21) susceptibles d'être actionnées indépendamment l'une de l'autre, coopérant avec l'installation hydraulique (3) et influençant le sens de rotation et de couplage des segments de stabilisateur,
**caractérisée en ce que**
l'installation de vannes (17) comprend uniquement une vanne de commutation (19) et uniquement une vanne de sécurité (21).

2. Installation selon la revendication 1,
**caractérisée en ce que**
la vanne de commutation (19) est un distributeur à 4/2 voies.

3. Installation selon l'une quelconque des revendications 1 ou 2,
**caractérisée en ce que**
la vanne de sécurité (21) relie dans une première position de fonctionnement, l'installation hydraulique (3) à la pompe (11) et dans une seconde position de fonctionnement, elle assure un couplage rigide ou amorti des segments de stabilisateur ou leur découplage.

4. Installation selon l'une quelconque des revendications précédentes,
**caractérisée en ce que**
la vanne de sécurité (21) est le dernier élémënt fonctionnel de l'alimentation hydraulique de l'installation hydraulique (3).

5. Installation selon l'une quelconque des revendications précédentes,
**caractérisée en ce que**
la vanne de commutation (19) et/ou la vanne de sécurité (21) sont actionnées de manière électromagnétique.

6. Installation selon l'une quelconque des revendications précédentes,
**caractérisée en ce que**
la vanne de commutation (19) et/ou la vanne de sécurité (21) ont une position préférentielle.

7. Installation (1) pour réduire la tendance au roulis d'un véhicule (installation antiroulis) ayant au moins deux essieux équipés chacun d'au moins deux roues et munis chacun d'un stabilisateur transversal, comprenant deux segments de stabilisateur susceptibles d'être tournés l'un par rapport à l'autre par une installation hydraulique (3, 3') commandée par une installation de commande électronique (41),
- au moins une pompe (11) alimentant les installations hydrauliques (3, 3'), et
- une installation de vannes (17) ayant des vannes de commutation et de sécurité actionnées indépendamment les unes des autres, coopérant avec les installations hydrauliques (3, 3') et influençant le sens de rotation et le couplage des segments de stabilisateur,
**caractérisée en ce que**
l'installation de vannes (17) comprend pour chaque installation hydraulique (3, 3'), respectivement une vanne de commutation (19, 19') et une vanne de sécurité (21, 21') actionnée indépendamment de celle-ci, et
les vannes de commutations (19, 19') et/ou les vannes de sécurité (21, 21') sont couplées rigidement l'une à l'autre.

8. Installation selon la revendication 7,
**caractérisée en ce que**
la vanne de commutation (19, 19') est un distributeur à tiroir à 4/2 voies.

9. Installation selon l'une quelconque des revendications 7 ou 8,
**caractérisée en ce que**
la vanne de sécurité (21, 21') relie l'installation hydraulique (3, 3') à la pompe (11) dans une première position de fonctionnement et dans une seconde position de fonctionnement elle assure un couplage rigide ou amorti des segments de stabilisateur ou un découplage des segments de stabilisateur.

10. Installation selon l'une quelconque des revendications 7 à 9,
**caractérisée en ce que**
la vanne de sécurité (21, 21') est le dernier élément fonctionnel de l'alimentation hydraulique et de l'installation hydraulique (3, 3').

11. Installation selon l'une quelconque des revendications 7 à 10,
**caractérisée en ce que**
la vanne de commutation (19, 19') et/ou la vanne de sécurité (21, 21') se commandent par un moyen électromagnétique.

12. Installation selon l'une quelconque des revendications 7 à 11,
**caractérisée en ce que**
la vanne de commutation (19, 19') et/ou la vanne de sécurité (21, 21') ont une position préférentielle.

13. Installation selon l'une quelconque des revendications 7 à 12,
**caractérisée par**
une conduite hydraulique (110) reliant les installations hydrauliques (3, 3') fournissant les niveaux de pression, et comportant une unité de vannes (112) qui libère une liaison hydraulique si la pression appliquée à l'une des installations hydrauliques (3), de préférence celle associée à l'essieu avant, est inférieure à la pression appliquée à l'autre installation hydraulique (3').

14. Installation selon l'une quelconque des revendications précédentes, et comportant une installation de répartition de débit influençant le débit hydraulique fourni par la pompe vers les installations hydrauliques associées aux essieux,
**caractérisée en ce que**
la pompe (11) est une pompe à débit volumique limité.

15. Installation selon l'une quelconque des revendications précédentes,
**caractérisée en ce que**
l'installation de répartition de débit (53) comprend un régulateur de débit (55) qui, dans une première position de fonctionnement, relie la première installation hydraulique (3) (de préférence associée à l'essieu avant) et qui, dans une seconde position de fonctionnement relie la seconde installation hydraulique (3') (de préférence associée à l'essieu arrière) à la pompe (11) et la première installation hydraulique (3) assure l'alimentation de préférence avec un débit d'huile pratiquement constant.

16. Installation selon l'une quelconque des revendications précédentes,
**caractérisée en ce que**
l'installation de répartition de débit (53a) comporte un régulateur de débit (55a) qui dans une première position fonctionnelle relie la première installation hydraulique (3) (de préférence associée à l'essieu avant) et dans la seconde position fonctionnelle, la seconde installation hydraulique (3') (de préférence associée à l'essieu arrière) à la pompe (11), et alimente les installations hydrauliques (3, 3'), chaque fois avec un débit d'huile, le rapport des débits d'huile étant pratiquement constant.

17. Installation selon l'une quelconque des revendications précédentes,
**caractérisée en ce que**
dans le premier circuit associé à la première installation hydraulique (3) il est prévu un premier régulateur de pression (43) et dans le circuit associé à la seconde installation hydraulique (3') il est associé à un second régulateur de pression (43'), les régulateurs de pression étant couplés l'un à l'autre.

18. Installation selon l'une quelconque des revendications précédentes,
**caractérisée par**
une conduite hydraulique (110) reliant les niveaux de pression appliqués aux installations hydrauliques (3, 3') avec une unité de vannes (112) qui libère une liaison hydraulique si la pression appliquée par l'installation hydraulique (3) associée à l'un des essieux de préférence l'essieu avant, est inférieure à la pression appliquée par l'autre installation hydraulique (3').

19. Installation selon l'une quelconque des revendications précédentes,
**caractérisée en ce que**
l'unité de vannes (112) comprend un ressort qui pousse une bille (116) contre un siège de soupape (114).

20. Installation selon l'une quelconque des revendications précédentes,
**caractérisée par**
des installations d'étranglement (DU2, DU1), associées aux conduites hydrauliques (13, 13').

21. Installation selon l'une quelconque des revendications précédentes,
**caractérisée en ce que**
le rapport de répartition est réglable en fonction de la surface des sections des installations d'étranglement (DU1, DU2).

22. Installation selon l'une quelconque des revendications 20 ou 21,
**caractérisée en ce que**
les installations d'étranglement (DU1, DU2) sont réalisées pour que le débit de fluide alimentant l'essieu avant soit supérieur à celui alimentant l'essieu arrière.

23. Installation selon la revendication 16,
**caractérisée en ce que**
le régulateur de débit (55a) est réalisé comme diviseur de débit à régulation unilatérale, avec seulement une arête de commande.

24. Installation selon l'une quelconque des revendications précédentes,
**caractérisée en ce que**
le premier régulateur de pression (43) et le second régulateur de pression (43') sont couplés par le régulateur de débit (55, 55a) muni d'un pilote de pression de préférence mécanique, et fonctionnant comme soupape de surpression (69).

25. Installation selon l'une quelconque des revendications précédentes,
**caractérisée par**
un régulateur de pression (134) relié d'un côté à la conduite hydraulique (13) et de l'autre côté à la conduite hydraulique (13') et comportant un tiroir de commande (142a, 142b, 142c), les surfaces soumises à la pression du tiroir de commande (142c) ayant de préférence des dimensions différentes.

26. Installation selon la revendication 25,
**caractérisée en ce que**
le régulateur de pression (134) est placé entre la conduite hydraulique (13') de l'essieu arrière et le réservoir (15) pour assurer la fonction du régulateur de pression (43').

27. Installation selon l'une quelconque des revendications précédentes,
**caractérisée par**
une installation de détection de position (installation de saisie (90), installation de capteur (160)) qui détecte la position d'au moins un piston de commande de la vanne de commutation (19, 19') et/ou des vannes de sécurité (21, 21') et/ou d'un tiroir (162).

28. Installation selon l'une quelconque des revendications précédentes,
**caractérisée par**
au moins deux commutateurs de pression installés dans des conduites hydrauliques ou des conduites de commande différentes.
